# EUROPEAN PATENT APPLICATION

(11) **EP 4 729 422 A1**
(43) Date of publication of application: **22.04.2026**
(21) Application number: 24825942.6
(22) Date of filing: 19.06.2024
(51) Int. Cl.: B64G 1/64, B64G 1/22

(54) **SEPARATION DEVICE, TRIGGER DEVICE, INSTRUMENT FIXTURE SEPARATOR, AND SPACECRAFT SEPARATION DEVICE**

(30) Priority: 19.06.2023 JP 2023099892
(71) Applicant: KAWASAKI JUKOGYO KABUSHIKI KAISHA, Kobe-shi, Hyogo 650-8670 (JP)
(72) Inventor: HORIE Yoichi, Kobe-shi, Hyogo 650-8670 (JP)
(74) Representative: Bals & Vogel Patentanwälte PartGmbB
(86) International application number: PCT/JP2024/022240
(87) International publication number: WO 2024/262541

(57) **Abstract**

An object is to be able to separate an upper separation member and a lower separation member more reliably. A separation device is a separation device used for a spacecraft to release a mechanical joint by an electrical signal, including: an upper separation member; a lower separation member disposed on the upper separation member; and a first wire and a second wire wound around the upper separation member and the lower separation member and fused by applying electric current. The first wire and the second wire are disposed in the positions so that, in a state where the upper separation member or the lower separation member receives force in a direction away from each other, the upper separation member and the lower separation member are positionally displaced relatively by fusion of one of the first wire and the second wire, and banding by another one of the first wire and the second wire is released.

## Description

### TECHNICAL FIELD

The present disclosure relates to a separation device, a trigger device, an apparatus fixture separator, and a spacecraft separation device.

### BACKGROUND ART

Patent Document 1 discloses that an insulator hub includes a center hole and a pair of parallel annular grooves, two fuse wires pass around the pair of annular grooves, a loop end on one end side of a fastening band is passed through the center hole, a hook-shaped release end of a banding wire is inserted into a loop end on the other end side of the fastening band.

Patent Document 1 discloses that when current flows in one of the fuse wires, tensile force by the one of the fuse wires disappears and the insulator hub is pivoted, and accordingly, the hook-shaped release end slips from the loop end on the other end side of the fastening band and is separated.

### PRIOR ART DOCUMENTS

### PATENT DOCUMENT(S)

Patent Document 1: Specification of US Patent Application Publication No. 2002/0080547

### SUMMARY

### PROBLEM TO BE SOLVED BY THE INVENTION

According to a technique disclosed in Patent Document 1, there is a possibility that the hook-shaped release end cannot be separated from the loop end even when the insulator hub is pivoted.

Accordingly, an object of the present disclosure is to be able to separate an upper separation member and a lower separation member more reliably.

### MEANS TO SOLVE THE PROBLEM

A separation device is a separation device used for a spacecraft to release a mechanical joint by an electrical signal, including: an upper separation member; a lower separation member disposed on the upper separation member; a first wire wound around the upper separation member and the lower separation member to band the upper separation member and the lower separation member and fused by applying electric current; and a second wire wound around the upper separation member and the lower separation member at a position away from the first wire to band the upper separation member and the lower separation member and fused by applying electric current, wherein the first wire and the second wire are disposed in positions so that, in a state where the upper separation member or the lower separation member receives force in a direction away from each other, the upper separation member and the lower separation member are positionally displaced relatively by fusion of one of the first wire and the second wire, and banding by another one of the first wire and the second wire is released.

A trigger device includes: the separation device described above; a holder holding the separation device; a biasing member biasing the lower separation member in a direction of separating the lower separation member from the upper separation member; and a movable body supported by the holder to be movable from a first position toward a second position, located in the first position while the upper separation member and the lower separation member are banded, and moved to the second position by biasing force of the biasing member in accordance with separation of the upper separation member and the lower separation member.

An apparatus fixture separator includes: an apparatus fixture including a locking target part to be connectable to a fixing target apparatus; a locking member including a locking part which can be locked to the locking target part, the locking part being movable from a locking position where the locking part is locked to the locking target part toward a locking release position where the locking part releases locking to the locking target part; a holder enabling the locking member to move from a holding position where the locking member is held to be kept in the locking position toward a release position where holding of the locking member is released so that the locking member can be moved from the locking position to the locking release position; a biasing member biasing the holder toward the release position; and the separation device described above keeping the holder in the holding position while the upper separation member and the lower separation member are banded and allowing movement of the holder from the holding position to the release position when banding of the upper separation member and the lower separation member is released.

A spacecraft separation device includes: a first spacecraft fixing member fixed to a first spacecraft; a second spacecraft fixing member fixed to a second spacecraft; a band wound around the first spacecraft fixing member and the second spacecraft fixing member to band the first spacecraft fixing member and the second spacecraft fixing member and biased in a direction spreading from a winding state; a band fixture including a locking target part and connected to the band; a locking mechanism including a locking member locked to the locking target part so that the band is kept in a state of being wound around the first spacecraft fixing member and the second spacecraft fixing member and capable of changing a state from a locking state where the locking member is locked to the locking target part toward a locking release state where the locking member releases the locking state of being locked to the locking target part upon receiving force toward a direction in which the band spreads; and the trigger device described above in which the movable body has contact with the locking mechanism to keep the locking state when the movable body is located in the first position and the movable body moves away from the locking mechanism and the locking mechanism changes the state from the locking state to the locking release state when the movable body is moved to the second position.

### EFFECTS OF THE INVENTION

According to this separation device, the upper separation member and the lower separation member can be separated more reliably.

According to the trigger device described above, a more reliable trigger operation is expected by the separation device separating the upper separation member and the lower separation member more reliably.

According to the apparatus fixture separator described above, a more reliable separation operation on the apparatus fixture is expected by the separation device separating the upper separation member and the lower separation member more reliably.

According to the spacecraft separation device described above, a more reliable separation of the spacecraft is expected by the trigger device performing the trigger operation by the separation device separating the upper separation member and the lower separation member more reliably.

### BRIEF DESCRIPTION OF DRAWINGS

[Fig. 1] is a perspective view illustrating a separation device according to a first embodiment.
[Fig. 2] is a perspective view illustrating a separation device according to the first embodiment.
[Fig. 3] is an explanation diagram for explaining an operation of the separation device in a case where both wires are fused.
[Fig. 4] is an explanation diagram for explaining an operation of the separation device in a case where one of the wires is fused.
[Fig. 5] is an explanation diagram for explaining an operation of a separation device according to a modification example in a case where both wires are fused.
[Fig. 6] is an explanation diagram for explaining an operation of the separation device according to the modification example in a case where one of the wires is fused.
[Fig. 7] is a perspective view illustrating a trigger device according to a second embodiment.
[Fig. 8] is an exploded perspective view illustrating the trigger device according to the second embodiment.
[Fig. 9] is a partial perspective view of the trigger device in a state before separating the separation device.
[Fig. 10] is a partial perspective view of the trigger device in a state before separating the separation device.
[Fig. 11] is a partial fracture view at an XI-XI line in Fig. 7.
[Fig. 12] is a perspective view illustrating an apparatus fixture separator.
[Fig. 13] is an exploded perspective view illustrating the apparatus fixture separator.
[Fig. 14] is a cross-sectional view at an XIV-XIV line in Fig. 12.
[Fig. 15] is a cross-sectional view at an XV-XV line in Fig. 12.
[Fig. 16] is a cross-sectional view at an XVI-XVI line in Fig. 12.
[Fig. 17] is a cross-sectional view illustrating a state where an apparatus fixture can be separated in the cross section at the XIV-XIV line.
[Fig. 18] is a perspective view illustrating a spacecraft separation device.
[Fig. 19] is a perspective view illustrating a state where the spacecraft separation device is separated.
[Fig. 20] is a partial cross-sectional view at the XX-XX line in Fig. 18.
[Fig. 21] is a cross-sectional view illustrating a state where a band fixture is separated in the cross section at the XX-XX line.

### DESCRIPTION OF EMBODIMENT(S)

### {First embodiment}

A separation device according to a first embodiment is described hereinafter. The separation device is a device in which a lower separation member and an upper separation member are separated by fusion of a wire. The separation device is used for a spacecraft operated in outer space, and releases a mechanical joint by an electrical signal. For example, the separation device may be used as a device for separating an artificial satellite or a fairing from a rocket or a device as a trigger of unfolding a solar cell in an artificial satellite from a folded state.

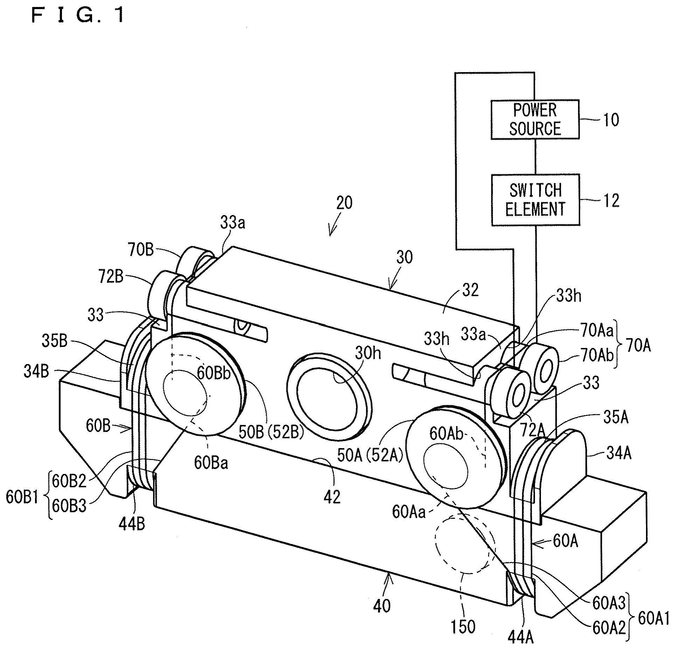

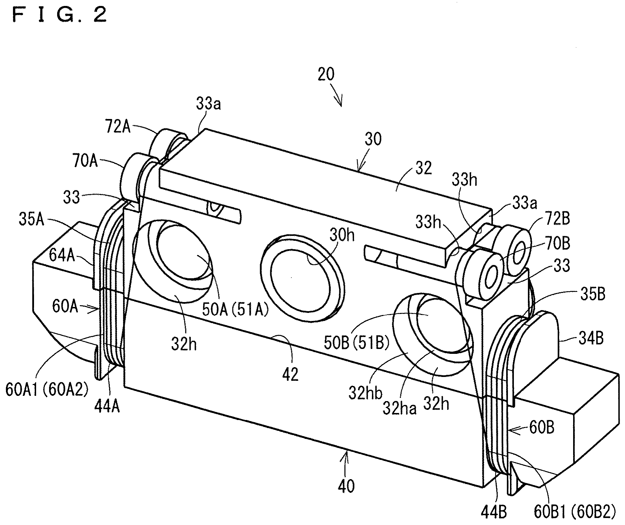

Fig. 1 and Fig. 2 are perspective views each illustrating a separation device 20. Illustrated in Fig. 1 as a functional block are a power source 10 and a switch element 12 for applying voltage to a separation device.

A whole configuration of the separation device 20 is described. The separation device 20 includes an upper separation member 30, a lower separation member 40, a first wire 60A, and a second wire 60B.

The lower separation member 40 is disposed on the upper separation member 30. In Fig. 1 and Fig. 2, the lower separation member 40 is disposed on a lower side of the upper separation member 30. The first wire 60A is wound around the upper separation member 30 and the lower separation member 40 to band the upper separation member 30 and the lower separation member 40. The second wire 60B is also wound around the upper separation member 30 and the lower separation member 40 to band the upper separation member 30 and the lower separation member 40. Thus, in an initial state, a banding state of the upper separation member 30 and the lower separation member 40 is kept by the first wire 60A and the second wire 60B. Terms of "upper" and "lower" assigned to a head of a name of each of the upper separation member and the lower separation member are terms for distinguishing the members. Such terms do not limit a location of the upper separation member on an upper side of the lower separation member in a gravity direction in manufacturing, assembling, and using the separation device.

At least a section between a first anode 70A and a first cathode 72A in the first wire 60A and at least a section between a second anode 70B and a second cathode 72B in the second wire 60B are wires fused by applying electric current. When both the section between the first anode 70A and the first cathode 72A and the section between the second anode 70B and the second cathode 72B are fused, the first wire 60A and the second wire 60B become untied, and banding of the upper separation member 30 and the lower separation member 40 is released.

The first wire 60A and the second wire 60B are disposed in positions so that, in a state the upper separation member 30 or the lower separation member 40 receives force in a direction away from each other, when one of the section between the first anode 70A and the first cathode 72A and the section between the second anode 70B and the second cathode 72B are fused and one of the first wire 60A and the second wire 60B becomes untied, the upper separation member 30 and the lower separation member 40 are positionally displaced relatively and banding by the other one of the first wire 60A and the second wire 60B is released.

A more specific example of a configuration of each part is described.

The lower separation member 40 is described, and then the upper separation member 30 is described for convenience. The lower separation member 40 is an elongated member. The lower separation member 40 has a shape that two corner parts corresponding to two parallel sides adjacent to each other in a rectangular parallelepiped are cut by an inclined surface, for example. The shape of the lower separation member 40 is not particularly limited, but any shape is applicable as long as the first wire 60A and the second wire 60B can be wound at positions away from each other and can receive force in a direction away from the upper separation member 30.

It is preferable that the lower separation member 40 includes a surface, at least a part of which, around which the first wire 60A and the second wire 60B are wound, has insulative properties. The lower separation member 40 may be a member in which an insulating layer is formed on a surface of metal or made up of an insulator such as resin or ceramics, for example.

A set concave part 42 is formed in a part of the lower separation member 40 on which the upper separation member 30 is stacked. A length dimension of the set concave part 42 is set to have a size corresponding to a length of a part of the upper separation member 30 having contact with the lower separation member 40 in a longitudinal direction of the lower separation member 40. The upper separation member 30 is stacked on the lower separation member 40 to have contact with a bottom surface of the set concave part 42. In this state, both end edge parts of the upper separation member 30 in the longitudinal direction are disposed to face both side surfaces of the set concave part 42, and the upper separation member 30 is positioned with respect to the lower separation member 40 in the longitudinal direction of the lower separation member 40.

In the present embodiment, the longitudinal direction of the lower separation member 40 coincides with that of the upper separation member 30. The longitudinal direction of the lower separation member 40 and the upper separation member 302 may be grasped as a width direction of the separation device 20. A direction in which the upper separation member 30 is stacked on the lower separation member 40 may be grasped as a height direction of the separation device 20. A direction perpendicular to both the width direction and the height direction of the separation device 20 may be grasped as a depth direction.

Both ends of the lower separation member 40 in the longitudinal direction protrude outside from both ends of the upper separation member 30 in the longitudinal direction while the upper separation member 30 is stacked on the lower separation member 40. Force in the direction away from the upper separation member 30 is applied to the lower separation member 40 using an end part of the lower separation member 40 protruding from the upper separation member 30. The set concave part 42 may be omitted.

The lower separation member 40 includes a first groove 44A through which the first wire 60A passes and a second groove 44B through which the second wire 60B passes. The first groove 44A and the second groove 44B are formed into a groove shape along a direction intersecting with the longitudinal direction of the lower separation member 40, that is a direction perpendicular thereto in a part of the lower separation member 40 on a side opposite to the upper separation member 30.

At least a part of a bottom of the first groove 44A and the second groove 44B may have a shape curved around an axis passing through inside the lower separation member 40 as a center of curvature along the longitudinal direction of the lower separation member 40. The first groove 44A and the second groove 44B are formed in positions where end parts of the upper separation member 30 are disposed in the longitudinal direction of the lower separation member 40.

Since the first wire 60A passes through the first groove 44A and the second wire 60B passes through the second groove 44B, a winding state of the first wire 60A and the second wire 60B with respect to the lower separation member 40 is stabilized. In other words, the first wire 60A and the second wire 60B are not moved in the longitudinal direction of the lower separation member 40. The first groove 44A and the second groove 44B may be omitted.

The upper separation member 30 is an elongated member. The upper separation member 30 is formed into a rectangular parallelepiped shape, for example. The shape of the upper separation member 30 is not particularly limited, but any shape is applicable as long as the upper separation member 30 can be stacked on the lower separation member 40, the first wire 60A and the second wire 60B can be wound at positions away from each other, and the upper separation member 30 can receive force in a direction away from the lower separation member 40.

It is preferable that the upper separation member 30 includes a surface, at least a part of which, around which the first wire 60A and the second wire 60B are wound, has insulative properties in the manner similar to the lower separation member 40.

As a more specific example, the upper separation member 30 includes a body 32 having a rectangular parallelepiped shape and wire winding parts 34A and 34B.

The wire winding parts 34A and 34B extend from part of both end parts of the body 32 in a longitudinal direction closer to the lower separation member 40 toward outside along the longitudinal direction of the body 32. A surface of each the body 32 and the wire winding parts 34A and 34B on a side of the lower separation member 40 is continuously formed as one planar surface. A distance between outer both end surfaces of the wire winding parts 34A and 34B in the longitudinal direction of the body 32 is equal to or smaller than a distance between both side surfaces of the set concave part 42. The upper separation member 30 is disposed on the set concave part 42 of the lower separation member 40 by making the planar surface constituted by the body 32 and the wire winding parts 34A and 34B on the side of the lower separation member 40 has surface contact with the bottom surface of the set concave part 42. In the present embodiment, the wire winding parts 34A and 34B have a smaller height with respect to the lower separation member 40 than the body 32, but may have a larger height than the body 32.

The upper separation member 30 includes a first groove 35A through which the first wire 60A passes and a second groove 35B through which the second wire 60B passes. For example, the first groove 35A and the second groove 35B are formed into a groove shape along a direction intersecting with the longitudinal direction of the upper separation member 30, that is a direction perpendicular thereto herein in a part of the wire winding parts 34A and 34B on a side opposite to the lower separation member 40.

At least a part of a bottom of the first groove 35A and the second groove 35B may have a shape curved around an axis passing through inside the upper separation member 30 as a center of curvature along the longitudinal direction of the upper separation member 30. The first groove 35A and the second groove 35B are formed to correspond to a position where the first groove 44A or the second groove 44B is disposed in the longitudinal direction of the upper separation member 30.

Since the first wire 60A passes through the first groove 35A and the second wire 60B passes through the second groove 35B, a winding state of the first wire 60A and the second wire 60B with respect to the upper separation member 30 is stabilized. In other words, the first wire 60A and the second wire 60B are not moved in the longitudinal direction of the upper separation member 30.

Since the first wire 60A passes through the first grooves 35A and 44A and the second wire 60B passes through the second grooves 35B and 44B, a banding state of the upper separation member 30 and the lower separation member 40 by the first wire 60A and the second wire 60B is stabilized.

The first groove 35A and the second groove 35B may be omitted. It is also appliable that the wire winding parts 34A and 34B are omitted and the wire is directly wound around the body 32 of the upper separation member.

A support hole 30h is formed in the upper separation member 30. Herein, the support hole 30h is formed in a center position of the body 32 in the longitudinal direction of the body 32. The support hole 30h is located in a position with an equal distance to the first groove 35A and the second groove 35B. Thus, the first wire 60A and the second wire 60B are located away from the support hole 30h by an equal distance.

The support hole 30h is a hole through which a support shaft for supporting the upper separation member 30 is passed. The support hole 30h passes through the upper separation member 30 in a direction perpendicular to both a direction in which the upper separation member 30 and the lower separation member 40 are stacked and a longitudinal direction of the upper separation member 30. In other words, the support hole 30h passes through the upper separation member 30 in a depth direction. The support shaft is rotatably inserted with respect to the support hole 30h. Since the support shaft is inserted into the support hole 30h, the upper separation member 30 is rotatably supported around the support shaft at a constant position with respect to the support shaft. Since the support shaft is inserted into the support hole 30h and the upper separation member 30 is supported at the constant position with respect to the support shaft, force in a direction relatively away from the lower separation member 40 acts on the upper separation member 30.

A fixture attachment hole 32h is formed in the body 32. Herein, two fixture attachment holes 32h are formed in both end parts of the body 32. The fixture attachment hole 32h is a hole for fixing a first wire fixture 50A or a second wire fixture 50B. The fixture attachment hole 32h passes through the body 32 in the same direction as the support hole 30h. One end of the fixture attachment hole 32h is opened with a larger degree than the other end. In other words, a diameter of one end of the fixture attachment hole 32h is larger than that of the other end. An annular stepped part 32ha directed to a side of the other end opening is formed in an intermediate part of the fixture attachment hole 32h in a longitudinal direction of the fixture attachment hole 32h.

A concave part 32hb is formed between the annular stepped part 32ha and one end opening.

The separation device 20 includes the first wire fixture 50A and the second wire fixture 50B. The first wire fixture 50A and the second wire fixture 50B are inserted into the fixture attachment hole 32h and fixed thereto.

The first wire fixture 50A includes a body part 51A and a head part 52A. The body part 51A is formed into an elongated shape to be insertable into the fixture attachment hole 32h. The head part 52A is located on one end side of the body part 51A and thicker than the body part 51A. For example, when a cross section of the body part 51A and the head part 52A has a circular shape in a case where the first wire fixture 50A is seen from the head part 52A, a diameter of the cross section of the head part 52A is larger than that of the cross section of the body part 51A. Then, the first wire fixture 50A is fixed to the upper separation member 30 while the body part 51A is inserted into the fixture attachment hole 32h.

A distal end on the other end side of the body part 51A may be located in the upper separation member 30. A state where the distal end on the other end side of the body part 51A is located in the upper separation member 30 indicates that the body part 51A does not protrude from an outward surface of the upper separation member 30.

For example, the body part 51A is inserted from the other end side of the fixture attachment hole 32h until the head part 52A comes in contact with an outer surface of the body 32. The distal end on the other end side of the body part 51A passes over the annular stepped part 32ha, and compressed toward the annular stepped part 32ha. The concave part 32hb is formed as a first concave part in the fixture attachment hole 32h on a side opposite to a side with which the head part 52A has contact. Since the distal end of the other end side of the body part 51A is plastically deformed to be compressed in the concave part 32hb, the first wire fixture 50A is fixed to the upper separation member 30 so as not to come out thereof. A whole compressed part of the distal end of the body part 51A is housed in the concave part 32hb. Accordingly, the distal end on the other end side of the body part 51A is located in the upper separation member 30, and does not protrude outside the body 32.

The second wire fixture 50B also includes a body part 51B and a head part 52B in the manner similar to the first wire fixture 50A. The second wire fixture 50B is also fixed to the upper separation member 30 in the manner similar to the first wire fixture 50A. The concave part 32hb is formed as a second concave part in the fixture attachment hole 32h on a side opposite to a side with which the head part 52B has contact. Since a distal end of the other end side of the body part 51B is also plastically deformed to be compressed in the concave part 32hb, the second wire fixture 50B is fixed to the upper separation member 30 so as not to come out thereof.

Since both fixing ends 60Aa and 60Ab of the wire 60A are sandwiched between the head part 52A of the first wire fixture 50A and the body 32, the end part of the wire 60A can be fixed. Since both fixing ends 60Ba and 60Bb of the wire 60B are sandwiched between the head part 52B of the second wire fixture 50B and the body 32, the end part of the wire 60B can be fixed.

Positions of the first wire fixture 50A and the second wire fixture 50B are located on a side of the lower separation member 40 with respect to electrodes 70A and 72A or electrodes 70B and 72B described hereinafter, for example. Positions of the first wire fixture 50A and the second wire fixture 50B are located closer to a side between the first wire winding part 34A and the second wire winding part 34B in relation to the first wire winding part 34A and the second wire winding part 34B. In other words, the positions of the first wire fixture 50A and the second wire fixture 50B are located closer to a side of the support hole 30h in relation to the first wire winding part 34A and the second wire winding part 34B.

Each of the first wire fixture 50A and the second wire fixture 50B may be a component referred to as a so-called rivet.

Each of the first wire fixture 50A and the second wire fixture 50B may be a screw. When each of the first wire fixture 50A and the second wire fixture 50B is a screw, an end part of the screw may be screwed to a nut in the concave part 32hb described above. Also in this case, it is sufficient that a distal end of a body part of the screw is housed in the concave part 32hb and located in the upper separation member. It is also applicable that a screw hole is formed in the upper separation member and the screw as the first wire fixture and the second wire fixture is screwed to the screw hole. Also in this case, it is also applicable that the distal end of the body part of the screw is hosed in the screw hole and does not protrude from the upper separation member. When the screw hole is formed in the upper separation member, it is also applicable that there is no annular stepped part 32ha and concave part 32hb, and the fixture attachment hole 32h does not pass through the body 32.

The first wire fixture 50A and the second wire fixture 50B may be located in the lower separation member 40 as illustrated in Fig. 1. An example of a wire fixture 150 in this case is illustrated by a dash-double-dot line in Fig. 1.

An electrode attachment hole 33h is formed in the body 32. Herein, corner parts on both ends of the body 32 on a side farther away from the lower separation member 40 are formed in a concave part 33 concaved toward a center side of the body 32 in the longitudinal direction of the body 32. The electrode attachment hole 33h is formed in the body 32 to be opened in the concave part 33. The electrode attachment hole 33h is formed into a hole-like shape opened outside in the longitudinal direction of the body 32 along the longitudinal direction of the body 32. In the concave part 33, two electrode attachment holes 33h are arranged side by side along the same direction as an axial direction of the support hole 30h. In the present example, an inner space of the electrode attachment hole 33h leads outside the upper separation member 30 via a slit-like opening. However, this configuration is not necessary.

Formed in a part of the concave part 33 farther away from the lower separation member 40 in relation to a center axis of the electrode attachment hole 33h is an exposure concave part 33a concaved more to the center side of the body 32 in the longitudinal direction of the body 32 than a part of the concave part 33 on a side closer to the lower separation member 40 in relation to the center axis of the electrode attachment hole 33h. The electrodes 70A and 72A or the electrodes 70B and 72B inserted into and held in the electrode attachment hole 33h can be exposed to a side opposite to the lower separation member 40 in the exposure concave part 33a.

The separation device 20 includes a first anode 70A and a first cathode 72A having a configuration of applying voltage to a part of a section of the first wire 60A and a second anode 70B and a second cathode 72B having a configuration of applying voltage to a part of a section of the second wire 60B. For example, the first anode 70A and the first cathode 72A are located in the end part of the upper separation member 30 on one side in the longitudinal direction, and the second anode 70B and the second cathode 72B are located in the end part of the upper separation member 30 on the other side in the longitudinal direction. An electrode relatively having larger potential in applying voltage to the wires 60A and 60B is an anode, and an electrode relatively having smaller potential is a cathode.

More specifically, the first anode 70A includes a body part 70Aa and a head part 70Ab. The body part 70Aa is formed into an elongated shape to be insertable into the electrode attachment hole 33h. The head part 70Ab is formed into a shape protruding from one end of the head part 70Ab to an outer peripheral side. The body part 70Aa is inserted into the electrode attachment hole 33h until the head part 70Ab comes in contact with an outward surface of the concave part 33. The body part 70Aa may be pressed in the electrode attachment hole 33h, fixed thereto by screwing, or fixed in the electrode attachment hole 33h by bonding, for example, so as not to come out thereof. In this state, a part of the body part 70Aa closer to the head part 70Ab exposed to a side opposite to the lower separation member 40 in the exposure concave part 33a.

The first cathode 72A includes a body part 72Aa and a head part 72Ab in the manner similar to the first anode 70A, and is inserted into the electrode attachment hole 33h adjacent to the first anode 70A and fixed thereto. Accordingly, the first anode 70A and the first cathode 72A are held by the upper separation member 30 at an interval in a parallel state.

Parts of the body part 72Aa of the first anode 70A and the body part 72Aa of the first cathode 72A exposed at the exposure concave part 33a are arranged at an interval in the axial direction of the support hole 30h. The exposed parts are located closer to a center side of the upper separation member 30 in the longitudinal direction of the upper separation member 30 in relation to the first groove 35A. The exposed parts are located farther away from the lower separation member 40 in relation to the first groove 35A. A part of the section of the first wire 60A is wound around the upper separation member 30 to pass above the body parts 70Aa and 72Aa. Accordingly, voltage can be applied to a part of a section of the first wire 60A having contact with the body parts 70Aa and 72Aa.

The second anode 70B and the second cathode 72B are fixed to the end part of the upper separation member 30 on the other side in the longitudinal direction by a structure similar to the fixing structure of the first anode 70A and the first cathode 72A.

The first anode 70A, the first cathode 72A, and the positions of the first anode 70A and the first cathode 72A are limited to the above examples. Those electrodes may be supported by the lower separation member 40 or a member for holding the other electrode. The voltage may be applied to a wider section of the wire or more wires. However, operability gets worse as an application range increases; that is to say, electrical power necessary for activation increases. Thus, the application range is preferably limited.

The first wire 60A and the second wire 60B are wires fused by Joule heat in applying electric current. The wires are made of alloy having large Joule heat in accordance with a large low volume efficiency such as stainless alloy and nichrome alloy, for example. The first wire 60A and the second wire 60B are wound around the upper separation member 30 and the lower separation member 40 as follows, for example. A winding configuration of the first wire 60A and a winding configuration of the second wire 60B may have a plane symmetry with respect to a plane passing through centers of the upper separation member 30 and the lower separation member 40 in the longitudinal direction of the upper separation member 30 and the lower separation member 40 and perpendicular thereto in the longitudinal direction as a symmetric plane. The winding configuration of the first wire 60A is mainly described in the description hereinafter.

The first wire 60A is wound around the upper separation member 30 and the lower separation member 40 a plurality of times. For example, the first wire 60A is wound around the upper separation member 30 and the lower separation member 40 a plurality of times through the first grooves 35A and 44A. When the number of windings of the first wire 60A is adjusted, strength of banding the upper separation member 30 and the lower separation member 40 can be adjusted. The number of windings of the first wire 60A may be smaller than two.

The first wire 60A includes the first fixing end 60Aa and the second fixing end 60Ab.

The first fixing end 60Aa is sandwiched and fixed between the head part 52A of the first wire fixture 50A and the outward surface of the body 32. A position where the first fixing end 60Aa is fixed is located closer to the center side of the body 32 in the longitudinal direction of the body 32 in relation to the body part 51A of the wire fixture 50A. As described above, the intermediate part of the first wire 60A passes through the first groove 44A. Thus, a part of the first wire 60A closer to the first fixing end 60Aa is directed to the position described above where the first fixing end 60Aa is fixed while being inclined to the center side of the body 32 in the longitudinal direction of the body 32 from the first groove 44A toward the upper separation member 30.

The second fixing end 60Ab is sandwiched and fixed between the head part 52A of the first wire fixture 50A and the outward surface of the body 32. A position where the second fixing end 60Ab is fixed is located closer to the lower separation member 40 in relation to the exposed part described above of the first anode 70A and the first cathode 72A. The position where the second fixing end 60Ab is fixed is located outside the body 32 in the longitudinal direction of the body 32 in relation to the body part 51A of the wire fixture 50A. As described above, since the intermediate part of the first wire 60A passes through the first groove 44A, a part of the first wire 60A closer to the second fixing end 60Ab is wound around the exposed part described above of the first anode 70A and the first cathode 72A while being inclined to the center side of the body 32 in the longitudinal direction of the body 32 from the first groove 44A toward the upper separation member 30. Then, a part of the first wire 60A closer to the second fixing end 60Ab is directed to a position between the head part 52A and the body 32 while keeping the same position in the longitudinal direction of the body 32 from the exposed part described above of the first anode 70A and the first cathode 72A.

As described above, the first fixing end 60Aa is fixed to the center side of the body 32 in relation to the body part 51A, and the second fixing end 60Ab is fixed to the outer position in relation to the body part 51A. Thus, the first fixing end 60Aa and the second fixing end 60Ab can be easily disposed so as not to intersect with each other in the head part 52A. When the first fixing end 60Aa and the second fixing end 60Ab do not intersect with each other between the head part 52A and the lower separation member 40, local sandwiching force is hardly applied to the first fixing end 60Aa and the second fixing end 60Ab. Accordingly, the first fixing end 60Aa and the second fixing end 60Ab is firmly sandwiched and fixed easily compared with a case where the first fixing end 60Aa and the second fixing end 60Ab intersect with each other. The fixing method described above is the example; thus, the first fixing end 60Aa and the second fixing end 60Ab need not be fixed by one wire fixture, but may also be fixed by two wire fixtures, respectively. In this case, both fixing ends 60Aa and 60Ab of the wire 60A are preferably fixed to only one of the upper separation member 30 and the lower separation member 40. Fixation of both fixing ends 60Ba and 60Bb of the wire 60B is similar to that of both fixing ends 60Aa and 60Ab of the wire 60A.

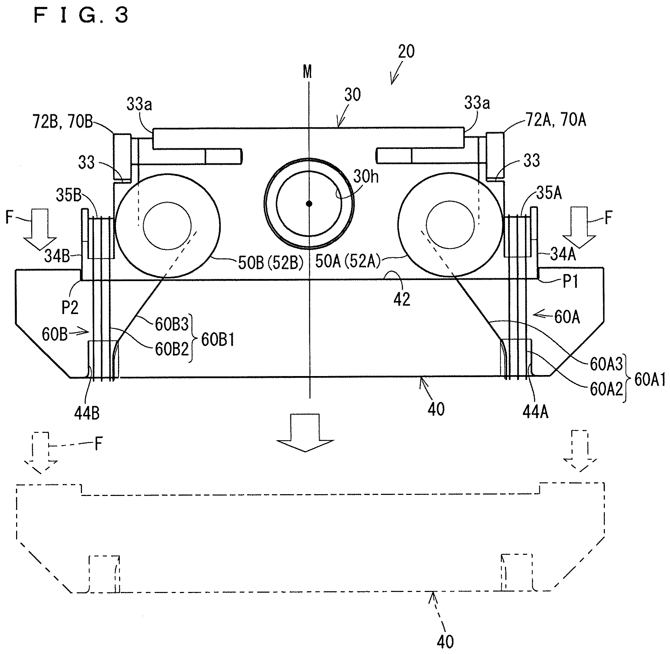

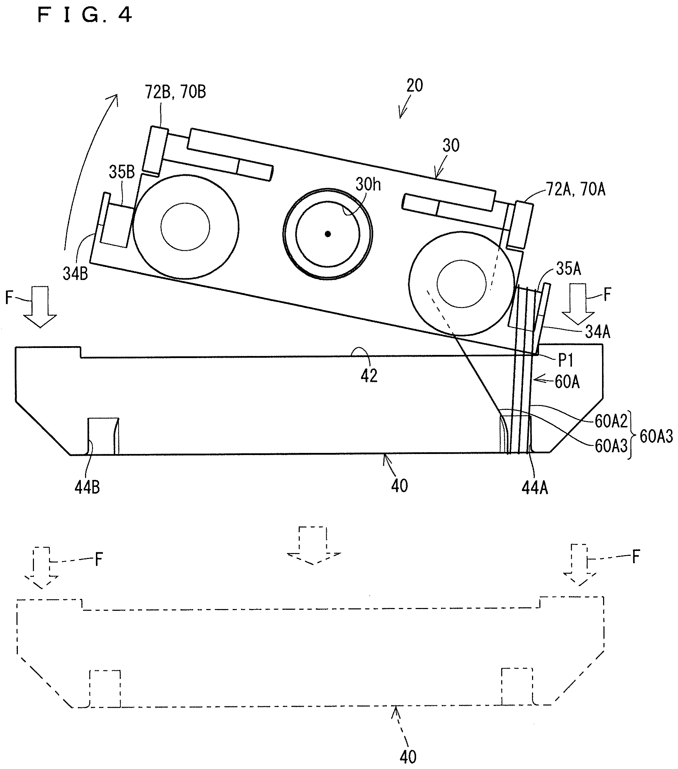

Herein, a center of oscillation in a relative swing motion of the upper separation member 30 and the lower separation member 40 by the fusion of the second wire 60B while the upper separation member 30 or the lower separation member 40 receives force in the direction away from each other is defined as a first center of oscillation P1. A center of oscillation in a relative swing motion of the upper separation member 30 and the lower separation member 40 by the fusion of the first wire 60A while the upper separation member 30 or the lower separation member 40 receives force in the direction away from each other is defined as a second center of oscillation P2. A line or a plane as an aggregation of points having an equal distance from the centers of oscillations P1 and P2 between the first center of oscillation P1 and the second center of oscillation P2 is defined as a center position M. The center position M is set to a position passing through a center axis of the support hole 30h, for example. The first center of oscillation P1 is located in a part where the bottom surface and one side surface of the set concave part 42 intersect with each other, and the second center of oscillation P2 is located in a part where the bottom surface and the other side surface of the set concave part 42 intersect with each other, for example. Fig. 3 illustrates an example of the center position M, the first center of oscillation P1, and the second center of oscillation P2, and Fig. 4 illustrates an example of the first center of oscillation P1.

The first wire 60A may include a first fracture section 60A1 passing through a route closer to the center position M than the first center of oscillation P1 is. In the present embodiment, the whole first wire 60A is the first fracture section 60A1 passing through the route closer to the center position M in relation to the first center of oscillation P1.

For example, when the upper separation member 30 swings around the first center of oscillation P1 with respect to the lower separation member 40, the upper separation member 30 is moved away from the lower separation member 40 with a large degree at a side closer to the center position M in relation to the first center of oscillation P1. Thus, the first fracture section 60A1 is pulled with a large degree and is easily fractured compared with a case where the wire is located in a position of passing through the first center of oscillation P1 or outside the first center of oscillation P1.

The second wire 60B may also include a second fracture section 60B1 passing through a route closer to the center position M than the second center of oscillation P2 is in the manner similar to the above configuration. In the present embodiment, the whole second wire 60B is the second fracture section 60B 1 passing through the route closer to the center position M in relation to the second center of oscillation P2.

The first wire 60A may include a first route winding section 60A2 and a first fracture promoting section 60A3.

The first route winding section 60A2 may be a section in which the wire is wound around the upper separation member 30 and the lower separation member 40 by a shortest route, for example. For example, the first route winding section 60A2 is a part of the first wire 60A wound around the upper separation member 30 and the lower separation member 40 through a route perpendicular to the longitudinal direction of the upper separation member 30 and the lower separation member 40. Herein, a part of the first wire 60A wound around the upper separation member 30 and the lower separation member 40 through the first grooves 35A and 44A is the first route winding section 60A2.

The first fracture promoting section 60A3 is a section passing through a position closer to the center position M in relation to the first route winding section 60A2. In the present embodiment, an oblique route section of the first wire 60A directed to the head part 52A from the first groove 44A is the first fracture promoting section 60A3.

The second wire 60B may also include a second route winding section 60B2 and a second fracture promoting section 60B3 in the manner similar to the above configuration.

An example of assembling the above separation device 20 is described.

Prepared are the first wire fixture 50A and the second wire fixture 50B fixed to or inserted into the upper separation member 30. In an initial stage, a gap may be formed to an extent that the end parts of wires 60A and 60B can be inserted from outside and sandwiched between the head parts 52A and 52B and the outer surface of the upper separation member 30.

The upper separation member 30 is stacked on the set concave part 42 of the lower separation member 40. The first fixing end 60Aa of the first wire 60A is sandwiched between the head part 52A and the upper separation member 30 and fixed thereto. Then, the first wire 60A is wound around one end part of the lower separation member 40 and the first wire winding part 34A of the upper separation member 30 through the first grooves 35A and 44A. Subsequently, a part of the first wire 60A closer to the second fixing end 60Ab is disposed on the exposed position of the first anode 70A and the first cathode 72A. Then, the second fixing end 60Ab is sandwiched between the head part 52A and the upper separation member 30 and fixed thereto.

Subsequently, it is also applicable that the head part 52A is further pressed toward the upper separation member 30, and the first fixing end 60Aa and the second fixing end 60Ab are firmly sandwiched between the head part 52A and the upper separation member 30 and fixed thereto.

The distal end of the body part 51A may be compressed before or after winding the first wire 60A. A winding direction of the first wire 60A may be reversed. That is to say, it is also applicable that the first wire 60A is wound after fixing the second fixing end 60Ab and the first fixing end 60Aa is fixed.

The second wire 60B is also wound around the upper separation member 30 and the lower separation member 40 in the manner similar to the first wire 60A.

An example of an operation of the separation device 20 is described.

Fig. 3 is an explanation diagram for explaining an operation in a case where both the first wire 60A and the second wire 60B are fused.

It is assumed in the present embodiment that force acts on the lower separation member 40 in a direction away from the upper separation member 30 in the separation device 20. For example, force F acts on both end parts of the lower separation member 40 in a direction away from the upper separation member 30. A shaft is rotatably inserted into the support hole 30h in the upper separation member 30, and the upper separation member 30 is supported at a constant position. It is also applicable that both ends of the lower separation member 40 is supported at a constant position, force is applied to the shaft inserted into the upper separation member 30 in a direction away from the lower separation member 40; thus the upper separation member 30 receives force in a direction away from the lower separation member 40. Force may acts on both the upper separation member 30 and the lower separation member 40 in a direction away from each other. The force F described above is generated by an elastomeric member such as a coil spring, magnetic force, gravity, gas pressure, and hydraulic pressure, for example.

The power source 10 is connected to the first anode 70A and the first cathode 72A. The switch element 12 intervenes between the power source 10 and the first anode 70A or the first cathode 72A. The switch element 12 is an electromagnetic relay or a semiconductor switch, for example. In the similar manner, the power source 10 is connected to the second anode 70B and the second cathode 72B with intervention of the switch element 12.

When the switch element 12 is switched to an open state or a close state, voltage is applied to a section between the first anode 70A and the first cathode 72A in the first wire 60A. In the similar manner, voltage is applied to a section between the second anode 70B and the second cathode 72B in the second wire 60B. Accordingly, the section to which the voltage is applied in the first wire 60A and the second wire 60B is fused by Joule heat, and the first wire 60A and the second wire 60B become untied.

When a part of the first wire 60A and the second wire 60B is fused, the winding state for the upper separation member 30 and the lower separation member 40 is released. Accordingly, the upper separation member 30 and the lower separation member 40 can be separated from each other, and the lower separation member 40 is moved in a direction away from the upper separation member 30 as the lower separation member 40 illustrated by a dash-double-dot line in Fig. 3.

Fig. 4 is an explanation diagram for explaining an operation in a case where the first wire 60A is not fused but the second wire 60B is fused.

In this case, the upper separation member 30 and the lower separation member 40 are kept in contact with each other in a position where the first wire 60A is wound. A relative banding state of the upper separation member 30 and the lower separation member 40 is released in a position where the second wire 60B is wound.

Thus, when both end parts of the lower separation member 40 is pressed in a direction away from the upper separation member 30 by the force F, the first wire winding part 34A of the upper separation member 30 is moved together with the lower separation member 40. Since the second wire winding part 34B of the upper separation member 30 can get away from the lower separation member 40, the upper separation member 30 is rotated around the center axis of the support hole 30h. Accordingly, the upper separation member 30 relatively swings around the first center of oscillation P1 with respect to the lower separation member 40.

When the upper separation member 30 relatively swings around the first center of oscillation P1 with respect to the lower separation member 40, a gap occurs between the upper separation member 30 and the lower separation member 40 in a position closer to the side of the center position M in relation to the first center of oscillation P1. Thus, tensile force larger than that in the initial state acts on the first fracture promoting section 60A3 located closer to the center position M in relation to the first center of oscillation P1 in the first wire 60A. The first fracture promoting section 60A3 is fractured by the tensile force.

Particularly, the first fracture promoting section 60A3 is located closer to the center position M than the first route winding section 60A2 is in the first wire 60A. Since the gap between the upper separation member 30 and the lower separation member 40 gets larger as getting away from the first center of oscillation P1, larger tensile force acts on the first fracture promoting section 60A3 than on the first route winding section 60A2. Thus, the first fracture promoting section 60A3 is fractured more easily than the first route winding section 60A2. Furthermore, when the first fracture promoting section 60A3 is the section including a section of one wire, the tensile force acts on the section of one wire. Thus, the first fracture promoting section 60A3 is easily fractured also from this point.

When the first wire 60A is fractured by the tensile force, the relative banding state of the upper separation member 30 and the lower separation member 40 is released also in the position where the first wire 60A is wound. Accordingly, the lower separation member 40 can be moved in the direction away from the upper separation member 30 as the lower separation member 40 illustrated by a dash-double-dot line in Fig. 4.

Also in a case where the second wire 60B is not fused but the first wire 60A is fused, the lower separation member 40 can be separated from the upper separation member 30 in the manner similar to the above description. In this case, the upper separation member 30 relatively swings around the second center of oscillation P2 with respect to the lower separation member 40.

According to the separation device 20 having the above configuration, the first wire 60A and the second wire 60B are wound around the upper separation member 30 and the lower separation member 40 so that the upper separation member 30 and the lower separation member 40 are positionally displaced relatively by the fusion of one of the first wire 60A and the second wire 60B, and banding by the other one of the first wire 60A and the second wire 60B is released. Thus, even when one of the first wire 60A and the second wire 60B is fused, the upper separation member 30 and the lower separation member 40 are separated more reliably.

Each of the first wire 60A and the second wire 60B is wound around the upper separation member 30 and the lower separation member 40 a plurality of times. Herein, the first route winding section 60A2 and the second route winding section 60B2 are wound around the upper separation member 30 and the lower separation member 40 a plurality of time. Thus, the upper separation member 30 and the lower separation member 40 are easily kept in the banding state compared with the case where the wire is wound around the lower separation member and the upper separation member only once. For example, even when the force F described above is set to large for a reliable separation operation, the upper separation member 30 and the lower separation member 40 are hardly separated before the fusion of the first wire 60A or the second wire 60B. In the meanwhile, the upper separation member 30 and the lower separation member 40 are easily separated by the large force F after the fusion of the first wire 60A or the second wire 60B.

The voltage is applied to a part of the section in the first wire 60A and the second wire 60B by the first anode 70A and the first cathode 72A and the second anode 70B and the second cathode 72B. A part of the section in the first wire 60A and the second wire 60B concentratedly generates heat and can be fused compared with a case where the voltage is applied to the whole wire. Thus, the first wire 60A and the second wire 60B are easily fused with small electrical power.

For example, it is sufficient that the voltage is applied to at least a part of the winding section wound once in a configuration that the first wire 60A and the second wire 60B are wound a plurality of times. In this case, the winding state of the first wire 60A and the second wire 60B wound a plurality of times is released by the fusion of at least a part of the wiring section wound once. Thus, the banding of the upper separation member 30 and the lower separation member 40 can be kept more reliably while the first wire 60A and the second wire 60B can be fused by small electrical power.

Since the first wire 60A includes the first fracture section 60A1 passing through the route closer to the center position M in relation to the first center of oscillation P1, the first fracture section 60A1 is pulled with a large degree and is easily fractured when the upper separation member 30 and the lower separation member 40 relatively swing around the first center of oscillation P1. Since the second wire 60B includes the second fracture section 60B1 passing through the route closer to the center position M in relation to the second center of oscillation P2, the second fracture section 60B1 is pulled with a large degree and is easily fractured when the upper separation member 30 and the lower separation member 40 relatively swing around the second center of oscillation P2. Accordingly, the upper separation member 30 and the lower separation member 40 are easily separated from each other.

Furthermore, the first wire 60A includes the first route winding section 60A2 and the first fracture promoting section 60A3. The second wire 60B includes the second route winding section 60B2 and the second fracture promoting section 60B3. Thus, the upper separation member 30 and the lower separation member 40 are easily kept in the banding state by the first route winding section 60A2 and the second route winding section 60B2. When the upper separation member 30 and the lower separation member 40 relatively swing, the first fracture promoting section 60A3 and the second fracture promoting section 60B3 are easily pulled with a larger degree than the first route winding section 60A2 and the second route winding section 60B2, and are easily fractured. Accordingly, the upper separation member 30 and the lower separation member 40 are separated from each other more easily.

The first wire 60A passes through the first grooves 35A and 44A, and the second wire 60B passes through the second grooves 35B and 44B. Thus, the routes of the first wire 60A and the second wire 60B is stabilized, the banding state of the upper separation member 30 and the lower separation member 40 is stabilized, and the separation operation is easily stabilized.

Since the end parts of the first wire 60A and the second wire 60B are sandwiched between the head parts 52A and 52B of the wire fixtures 50A and 50B and the upper separation member 30, the first wire 60A and the second wire 60B can be easily fixed.

Since the distal ends of the body parts 51A and 51B of the wire fixtures 50A and 50B are plastically deformed in the concave part 32hb, the wire fixtures 50A and 50B are fixed to the upper separation member 30 so as not to come out thereof. Thus, suppressed is contact of the first wire 60A and the second wire 60B with the wire fixtures 50A and 50B at a side opposite to the head parts 52A and 52B. Accordingly, even when the wire fixtures 50A and 50B are formed of metal, for example, current for fusion hardly flows in the wire fixtures 50A and 50B unintendedly.

### {Modification example of first embodiment}

Described in the above embodiment 1 is the configuration that the tensile force acts on the wire 60A or the wire 60B by the relative positional displacement of the upper separation member 30 with respect to the lower separation member 40 to fracture the wire 60A or the wire 60B.

The configuration of releasing the banding by the first wire 60A or the second wire 60B in accordance with the relative positional displacement of the upper separation member 30 with respect to the lower separation member 40 is not limited to the above example.

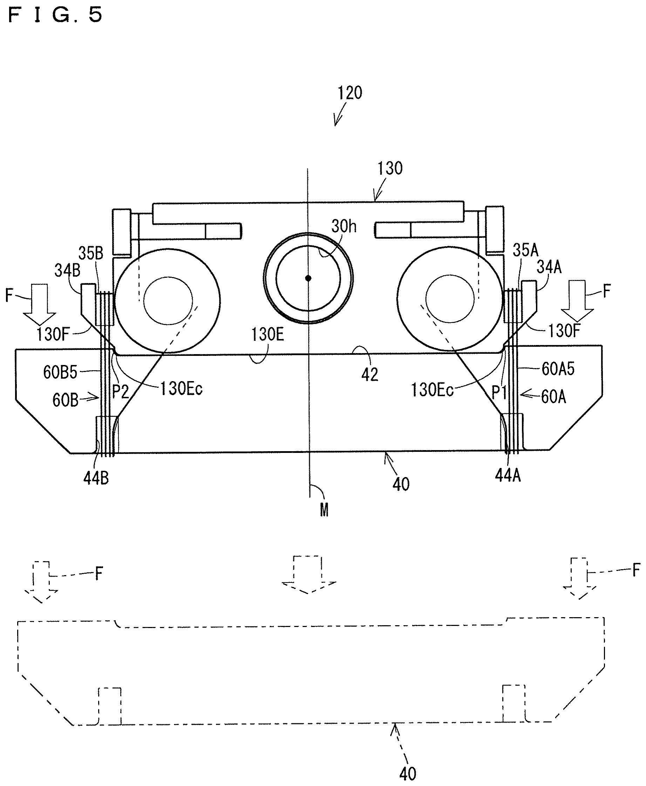

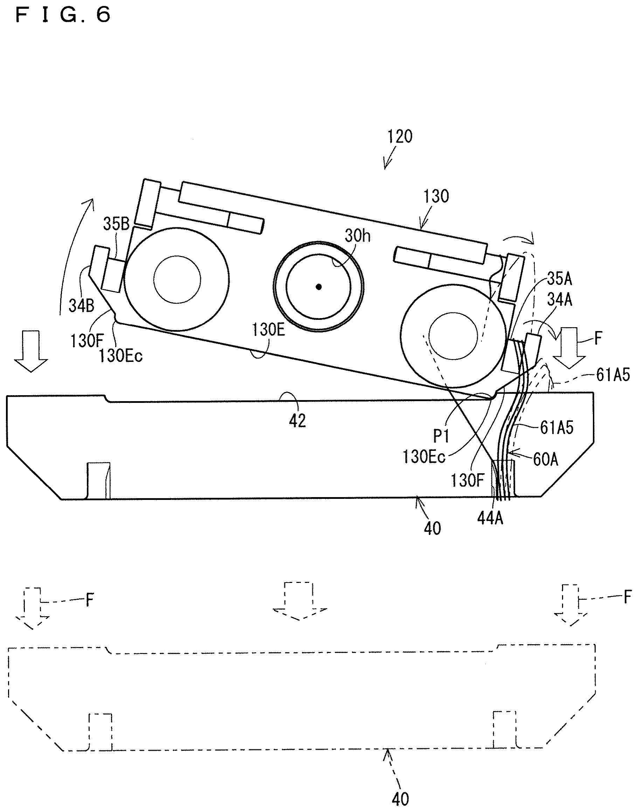

Described in the following modification example is a configuration example that, as illustrated in Fig. 5 and Fig. 6, the first wire 60A or the second wire 60B deviates from an upper separation member 130 and the lower separation member 40 in accordance with a relative positional displacement of the upper separation member 130 with respect to the lower separation member 40 to release banding.

That is to say, in the present modification example, the first wire 60A includes a first deviation section 60A5 passing through a route farther away from the center position M in relation to the first center of oscillation P1. The second wire 60B includes a second deviation section 60B5 passing through a route farther away from the center position M in relation to the second center of oscillation P2.

More specifically, a separation device 120 according to the present modification example includes the upper separation member 130 in place of the upper separation member 30.

The upper separation member 130 is different from the upper separation member 30 in the following points. That is to say, a part of the upper separation member 130 directed to both outer sides of the upper separation member 130 in a longitudinal direction of the upper separation member 130 from a part 130E thereof having contact with the lower separation member 40 is obliquely removed. In other words, an inclination surface 130F intervenes between a surface of the upper separation member 130 having contact with the lower separation member 40 and outward surfaces on both ends of the upper separation member 130 in the longitudinal direction. A curved surface may intervene between the part 130E of the upper separation member 130 having contact with the lower separation member 40 and the inclination surface 130F. A level difference or a curved surface may be located between the part 130E of the upper separation member 130 having contact with the lower separation member 40 and the outward surfaces on both ends of the upper separation member 130 in the longitudinal direction.

In the longitudinal direction of the lower separation member 40, a dimension of the set concave part 42 in the lower separation member 40 may be set to be equal to or larger than a dimension of a surface of the upper separation member 130 having contact with the lower separation member 40.

In the present modification example, a connection part 130Ec is located between the part 130E of the upper separation member 130 having contact with the lower separation member 40 and the inclination surface 130F. A point or a line where the connection part 130Ec and the set concave part 42 of the lower separation member 40 have contact with each other serves as the first center of oscillation P1 and the second center of oscillation P2.

The first center of oscillation P1 is located closer to the center position M in relation to the first wire 60A passing through the first grooves 35A and 44A. The second center of oscillation P2 is located closer to the center position M in relation to the second wire 60B passing through the second grooves 35B and 44B.

The section in the first wire 60A described as the first route winding section 60A2 is the first deviation section 60A5 passing through the route farther away from the center position M in relation to the first center of oscillation P1. The section in the second wire 60B described as the second route winding section 60B2 is the second deviation section 60B5 passing through the route farther away from the center position M in relation to the second center of oscillation P2.

An operation of the separation device 120 according to the present modification example is described.

Fig. 5 is an explanation diagram for explaining an operation in a case where both the first wire 60A and the second wire 60B are fused. In this case, when a part of the first wire 60A and the second wire 60B is fused, the winding state for the lower separation member 40 and the upper separation member 130 is released. Accordingly, the lower separation member 40 and the upper separation member 130 can be separated from each other, and the lower separation member 40 is moved in a direction away from the upper separation member 130 as the lower separation member 40 illustrated by a dash-double-dot line in Fig. 5.

Fig. 6 is an explanation diagram for explaining an operation in a case where the first wire 60A is not fused but the second wire 60B is fused.

In this case, the lower separation member 40 and the upper separation member 30 are kept in contact with each other in a position where the first wire 60A is wound immediately after the fusion of the second wire 60B. A relative banding state of the lower separation member 40 and the upper separation member 130 is released in a position where the second wire 60B is wound.

Thus, when both end parts of the lower separation member 40 is pressed in a direction away from the upper separation member 130 by the force F, the first wire winding part 34A of the upper separation member 130 is moved together with the lower separation member 40. Since the second wire winding part 34B of the upper separation member 130 can deviate from the lower separation member 40, the upper separation member 130 is rotated around the center axis of the support hole 30h. Accordingly, the upper separation member 130 relatively swings around the first center of oscillation P1 with respect to the lower separation member 40.

Since the upper separation member 130 relatively swings around the first center of oscillation P1 with respect to the lower separation member 40, the first groove 35A located farther away from the first center of oscillation P1 in relation to the center position M gets close to the first groove 44A. Thus, laxation may occur in the first wire 60A wound to pass through the first grooves 35A and 44A.

The upper separation member 130 can swing with a larger degree with respect to the lower separation member 40 in accordance with the laxation of the first wire 60A. Accordingly, the laxation of the first wire 60A gets larger, and the first wire winding part 34A can come out of the first wire 60A in course of time. The lower separation member 40 can be separated from the first wire 60A.

Accordingly, the relative banding state of the lower separation member 40 and the upper separation member 130 is released also in a position where the first wire 60A is wound. Accordingly, the lower separation member 40 can be moved in the direction away from the upper separation member 130 as the lower separation member 40 illustrated by a dash-double-dot line in Fig. 6.

Also in a case where the second wire 60B is not fused but the first wire 60A is fused, the lower separation member 40 can be separated from the upper separation member 130 in the manner similar to the above description. In this case, the upper separation member 130 relatively swings around the second center of oscillation P2 with respect to the lower separation member 40.

According to this modification example, a function effect similar to that of the above embodiment can be obtained except for the function effect of fracturing the wires 60A and 60B by the tensile force.

When the lower separation member 40 and the upper separation member 130 relatively swing around the first center of oscillation P1, the first deviation section 60A5 in the first wire 60A is deviated from the lower separation member 40 or the upper separation member 130 using a configuration that an end part of the lower separation member 40 and an end part of the upper separation member 130 get close to each other at a position outside the first center of oscillation P1. In the similar manner, when the lower separation member 40 and the upper separation member 130 relatively swing around the second center of oscillation P2, the second deviation section 60B5 in the second wire 60B is deviated from the lower separation member 40 or the upper separation member 130 using a configuration that an end part of the lower separation member 40 and an end part of the upper separation member 130 get close to each other at a position outside the second center of oscillation P2. Thus, the lower separation member 40 and the upper separation member 130 can be separated from each other even when the wires 60A and 60B are not fractured by the tensile force.

It is also applicable that the embodiment and the modification example described above are combined, and a part of the wire is easily fractured in accordance with a relative positional displacement of the upper and lower separation members and the other part of the wire easily comes out of the separation members.

The separation device described in the embodiment and the modification example described above can be used for various usage purposes using the configuration that the state of the lower separation member and the upper separation member is changed from the banding state to the state where the banding is released in a spacecraft.

For example, the separation device may be used as a configuration device of an apparatus for separating a rocket body and an artificial satellite.

The separation device may be used as a configuration device of an apparatus for separating a part of a rocket from a remaining part.

The separation device may be used for a return capsule for collecting an object collected in space on the earth.

The separation device may be used as a configuration device of an apparatus for opening a cover of an artificial satellite emission mechanism.

The separation device may be used as a configuration device of an apparatus for opening a solar cell paddle. For example, the solar cell paddle is fixed in a folded state by a launch locking apparatus during a launch. A most strict mechanical environment for an apparatus used in space is an environment that the apparatus is halfway through entering orbit from a viewpoint of vibration and an impact environment, for example. Thus, the solar cell paddle is fixed by the launch locking apparatus so as not to be vibrated during the launch, and when the apparatus mounting the solar cell paddle reaches the orbit, the fixation is released, and the solar cell paddle is opened.

Not only the solar cell paddle but most of apparatuses used in space are considered to be fixed by the launch locking apparatus to be able to tolerate the mechanical environment during the launch. The separation device may be used for not only the launch locking apparatus of the solar cell paddle but also a separation device for opening a launch locking apparatus of various apparatuses used in space.

### {Second embodiment}

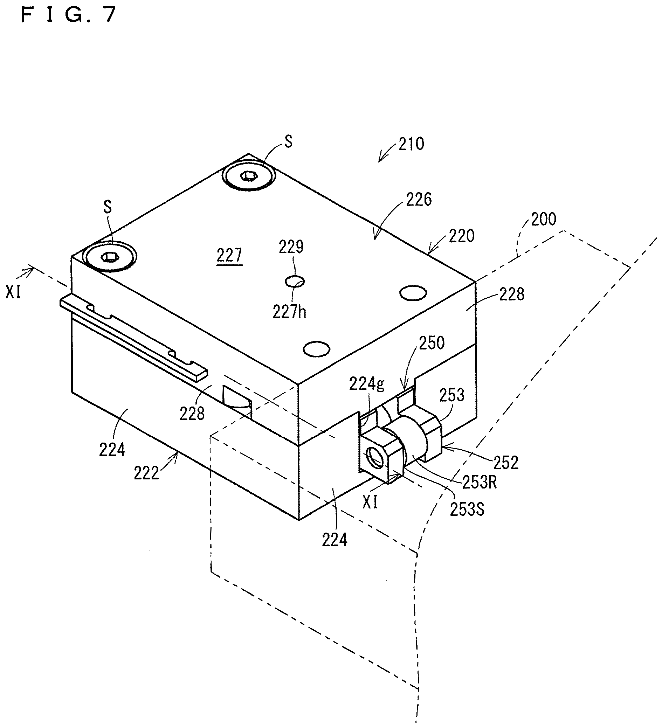

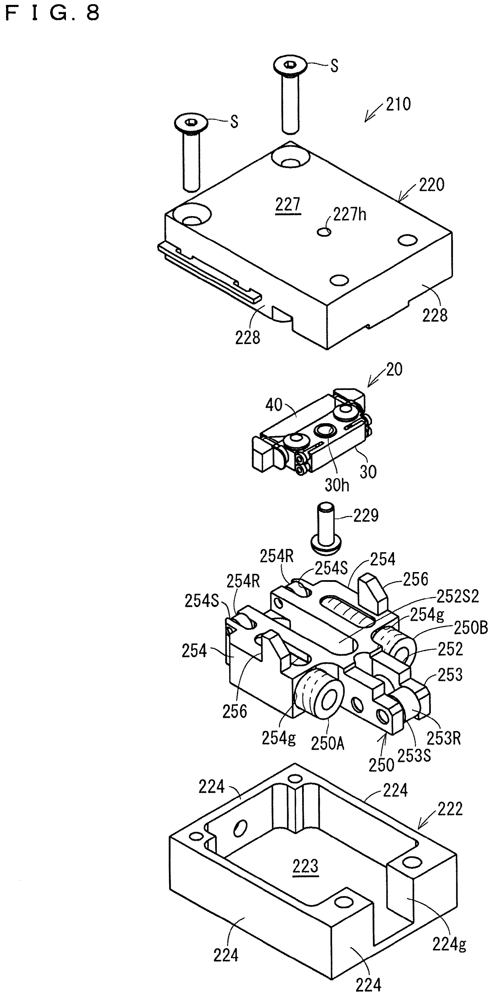

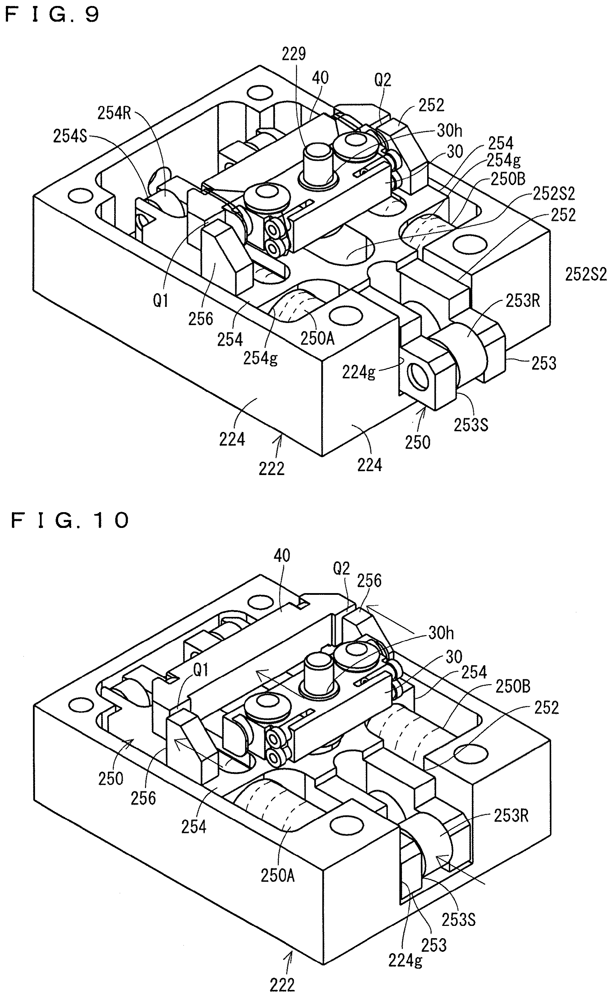

A trigger device according to a second embodiment is described. Fig. 7 is a perspective view illustrating a trigger device 210. Fig. 7 illustrates an apparatus 200 operated with an operation by the trigger device 210 as a trigger by a dash-double-dot line. Fig. 8 is an exploded perspective view illustrating the trigger device 210. Fig. 9 and Fig. 10 are perspective views in which a holder 220 of the trigger device 210 is partially omitted. Fig. 9 illustrates a state before the separation device 20 is separated, and Fig. 10 illustrates a state after the separation device 20 is separated.

The trigger device 210 includes the separation device 20, the holder 220, biasing members 250A and 250B, and a movable body 250. The trigger device 210 may include the separation device 120 in place of the separation device 20.

The separation device 20 is the device described in the above embodiment. The separation device 20 may be the device described in the modification example.

The holder 220 is a holder holding the separation device 20. In the present embodiment, the holder 220 is formed into a rectangular parallelepiped box-like shape housing the separation device 20 and the movable body 250.

The holder 220 includes a holder body 222 and a holder cover 226, for example. Each of the holder body 222 and the holder cover 226 may be a component integrally formed by metal or resin.

The holder body 222 includes a bottom plate part 223 and four wall parts 224. The bottom plate part 223 is formed into a quadrangular plate-like shape. Four wall parts 224 are formed into plate-like shapes protruding to a side of one main surface of the bottom plate part 223 from four sides of the bottom plate part 223, respectively. A part of the holder body 222 on a side opposite to the bottom plate part 223 is opened. The movable body 250 is housed in a space surrounded by the bottom plate part 223 and four wall parts 224.

A through concave part 224g passing through inside and outside the wall part 224 is formed in a center of one of the wall parts 224 in a longitudinal direction thereof. A part of the movable body 250 protrudes from the trigger device 210 through the through concave part 224g and retracts inside the trigger device 210.

The holder cover 226 includes a ceiling plate part 227 and four wall parts 228. The ceiling plate part 227 is formed into a quadrangular plate-like shape in the manner similar to the bottom plate part 223. Four wall parts 228 are formed into plate-like shapes protruding to the holder body 222 from four sides of the ceiling plate part 227, respectively. A part of the holder cover 226 on a side opposite to the ceiling plate part 227 is opened. The separation device 20 is housed in a space surrounded by the ceiling plate part 227 and four wall parts 228. However, the whole separation device may be housed in the holder body, or the separation device may be housed across the holder body and the holder cover.

A shaft support hole 227h into which a shaft 229 can be inserted is formed in the ceiling plate part 227. The shaft 229 is a member rotatably inserted into the support hole 30h formed in the upper separation member 30 of the separation device 20. A distal end of the shaft 229 protrudes from the upper separation member 30 while the shaft 229 is inserted into the support hole 30h in the upper separation member 30 and the shaft support hole 227h. Since the distal end of the shaft 229 is inserted into the shaft support hole 227h, the shaft 229 is supported at a constant position in the holder 220. Accordingly, the upper separation member 30 is pivotably supported on the holder 220 between the first wire 60A and the second wire 60B as a pivot center. The shaft 229 may have a configuration of being screwed to or pressed into the shaft support hole 227h, for example.

The lower separation member 40 is disposed in a position farther away from the through concave part 224g described above in relation to the upper separation member 30 while the separation device 20 is housed in the holder cover 226. Thus, when the lower separation member 40 is separated from the upper separation member 30, the lower separation member 40 is moved to a side away from the through concave part 224g.

The holder body 222 and the holder cover 226 are united with each other so that openings thereof face each other to constitute the holder 220 having the rectangular parallelepiped box-like shape.

The movable body 250 is housed in the holder body 222, and the separation device 20 is housed in the holder cover 226. Thus, the movable body 250 and the separation device 20 can have contact with and act on each other in the holder 220.

Banding of the holder body 222 and the holder cover 226 may be kept by a screw S, welding, or a locking structure, for example.

The biasing members 250A and 250B bias the lower separation member 40 in a direction away from the upper separation member 30. In the present embodiment, the biasing members 250A and 250B include a first biasing member 250A and a second biasing member 250B. The first biasing member 250A and the second biasing member 250B are coil springs. The biasing members 250A and 250B bias the lower separation member 40 in a direction away from the upper separation member 30 via the movable body 250.

The biasing member may directly bias the lower separation member. For example, two coil springs may intervene between both end parts of the lower separation member and the wall part of the holder cover to directly bias the lower separation member. In this case, the movable body may have a configuration of being pressed and moved by the lower separation member biased and moved by the coil springs. That is to say, the biasing member may directly or indirectly bias the movable body. The biasing member may directly or indirectly bias the lower separation member. The biasing member may not be the coil spring, but may be a plate spring or rubber, for example.

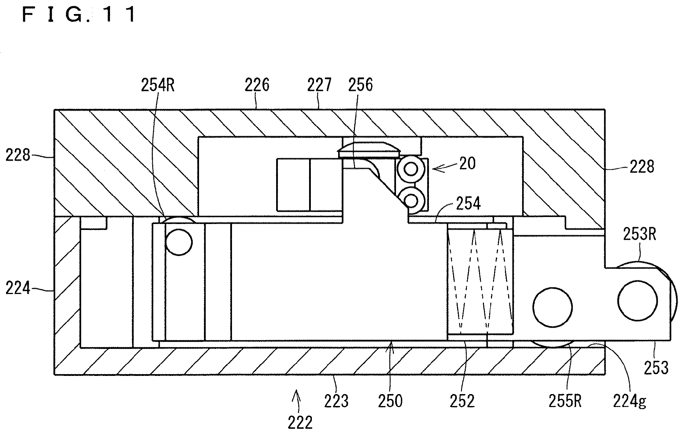

The movable body 250 is supported by the holder 220 to be movable from a first position toward a second position. Herein, the movable body 250 is movably supported in the holder body 222. The movable body 250 is located in the first position in a state where the upper separation member 30 and the lower separation member 40 are banded. Fig. 9 illustrates the movable body 250 located in the first position. In this state, a part of the movable body 250 protrudes outside the holder 220 through the through concave part 224g. The movable body 250 is moved to the second position by biasing force of the coil springs 250A and 250B in accordance with separation of the upper separation member 30 and the lower separation member 40. Fig. 10 illustrates the movable body 250 located in the second position. In this state, a part of the movable body 250 retracts inside the through concave part 224g. Fig. 11 is a partial fracture view at an XI-XI line in Fig. 7. Fig. 11 illustrates the holder 220 in a cross-sectional view and the movable body 250 located inside in a side view.

More specifically, the movable body 250 includes a movable core part 252, two receiving parts 254, and two press pieces 256. The movable body 250 may be a component integrally formed by metal or resin, for example.

The movable core part 252 is formed into an elongated shape, and disposed along a through direction in which the through concave part 224g passes through the wall part 224 while passing through the through concave part 224g. At least a part of the movable core part 252 is disposed in the holder body 222. One end of the movable core part 252 is a protrusion end part 253 capable of protruding outside the holder body 222.

Formed in the protrusion end part 253 is a slit 253S extending from a distal end of the protrusion end part 253 toward an intermediate part of the movable core part 252 in a longitudinal direction of the movable core part 252. The slit 253S is opened to a side of the distal end of the protrusion end part 253, a side of the bottom plate part 223, and a side of the holder cover 226. Guide rollers 253R and 255R are rotatably disposed in the slit 253S. The guide roller 255R is located closer to a side of a base end of the protrusion end part 253 in relation to the guide roller 253R. When the protrusion end part 253 is moved in the through concave part 224g, the guide rollers 253R and 255R can roll over a surface surrounding the through concave part 224g as extension of the bottom plate part 223. Accordingly, the protrusion end part 253 can be smoothly moved in the through concave part 224g.

A slit 252S2 for avoiding interference with the shaft 229 described above is formed in the intermediate part of the movable core part 252 in the longitudinal direction of the movable core part 252.

Two receiving parts 254 are formed on both side parts of the movable core part 252. The receiving part 254 is formed into an elongated shape elongated in the same direction as the longitudinal direction of the movable core part 252. Formed in the receiving part 254 is a biasing member housing concave part 254g extending along the longitudinal direction of the receiving part 254 and opened on a side of the protrusion end part 253. The biasing members 250A and 250B are inserted into the biasing member housing concave part 254g. The biasing members 250A and 250B intervene between a bottom surface of the biasing member housing concave part 254g and an inner surface of the wall part 224 of the holder body 222 facing the bottom surface in a compressed state while the movable body 250 is housed in the holder body 222. In the present embodiment, the biasing members 250A and 250B have contact with the inner surface of the wall part 224 at both sides of the through concave part 224g. Accordingly, the biasing members 250A and 250B constantly bias each of two receiving parts 254 in a direction away from the through concave part 224g.

A slit 254S is formed in an end part of two receiving parts 254 on a side opposite to the protrusion end part 253 of the movable core part 252. A guide roller 254R are rotatably supported in the slit 254S. As illustrated in Fig. 11, when the guide roller 253R receives load to a side of the bottom plate part 223 of the holder body 222, the load is transmitted to an inner wall of the holder body 222 while the guide roller 255R serves as a pivot point. Then, the load is transmitted to an inner surface of the holder cover 226 while the guide roller 254R serves as an operating point. Since the roller intendedly serves as the transmission point of the load, friction can be reduced, and the movable body 250 can be smoothly moved toward the second position.

The press piece 256 protrudes from each of the receiving parts 254 to the side of the holder cover 226. When assumed is a state where the separation device 20 is supported in the holder cover 226 by the shaft 229 and the movable body 250 is located in the first position, two press pieces 256 are disposed to have contact with the lower separation member 40 in positions facing the surface of the lower separation member 40 on the side of the upper separation member 30 in both ends of the lower separation member 40 in the longitudinal direction.

As described above, since the biasing members 250A and 250B bias the movable body 250 toward the second position, two press pieces 256 are also biased toward the second position. Thus, two press pieces 256 have contact with both ends of the lower separation member 40 and bias the lower separation member 40 in the direction away from the upper separation member 30.

That is to say, the lower separation member 40 includes a first load position Q1 receiving bias force of the first biasing member 250A and a second load position Q2 receiving bias force of the second biasing member 250B. The first load position Q1 is located farther away to the side of the first wire 60A in relation to the pivot center in the longitudinal direction of the lower separation member 40. The second load position Q2 is located farther away to the side of the second wire 60B in relation to the pivot center in the longitudinal direction of the lower separation member 40.

For example, the first load position Q1 is located farther away from the second wire 60B to the side of the first wire 60A in relation to the pivot center in the longitudinal direction of the lower separation member 40. The second load position Q2 is located farther away from the first wire 60A to the side of the second wire 60B in relation to the pivot center in the longitudinal direction of the lower separation member 40.

For example, the first load position Q1 may be located closer to the first wire 60A in relation to the pivot center in the longitudinal direction of the lower separation member 40. The second load position Q2 may be located closer to the second wire 60B in relation to the pivot center in the longitudinal direction of the lower separation member 40.

For example, the first load position Q1 may be located farther away from the pivot center in relation to the first wire 60A on the side closer to the first wire 60A in relation to the pivot center in the longitudinal direction of the lower separation member 40. The second load position Q2 may be located farther away from the pivot center in relation to the second wire 60B on the side closer to the side of the second wire 60B in relation to the pivot center in the longitudinal direction of the lower separation member 40.

In the state before the separation device 20 is separated, two biasing members 250A and 250B bias two receiving parts 254 toward the second position. The biasing force of two biasing members 250A and 250B constantly acts on the first load position Q1 and the second load position Q2 on both ends of the lower separation member 40 via the press piece 256. Since the upper separation member 30 is held in a constant position in the holder 220 by the shaft 229, the lower separation member 40 banded with respect to the upper separation member 30 is also kept in a constant position in the holder 220. Thus, the biasing force of two biasing members 250A and 250B is in a state of being received by the first load position Q1 and the second load position Q2 on both ends of the lower separation member 40 located in the constant position. Thus, the movable body 250 is kept in a state of being located in the first position. In this state, the protrusion end part 253 protrudes outside from the through concave part 224g.

When both the first wire 60A and the second wire 60B are fused by applying electric current, the lower separation member 40 can be moved in the direction away from the upper separation member 30. The biasing force of two biasing members 250A and 250B acts on the first load position Q1 and the second load position Q2 on both ends of the lower separation member 40 via the press piece 256. Thus, the movable body 250 is moved from the first position to the second position while moving the lower separation member 40 in the direction away from the upper separation member 30 by the biasing force of two biasing members 250A and 250B. Accordingly, the protrusion end part 253 retracts inside the through concave part 224g.

When one of the first wire 60A and the second wire 60B is fused by applying electric current, one end of the lower separation member 40 can get away from the upper separation member 30, and the other end of the lower separation member 40 is kept in the banding state of being banded with the upper separation member 30. The upper separation member 30 can be pivoted around the shaft 229. Thus, the upper separation member 30 can be rotated around the shaft 229 and both ends of the lower separation member 40 can be parallelly moved in a direction away from the shaft 229 by the biasing force of two biasing members 250A and 250B.

Accordingly, as illustrated in Fig. 4, the upper separation member 30 swings with respect to the lower separation member 40 around the first center of oscillation P1 or the second center of oscillation P2 as the center of oscillation. Thus, as described in the embodiment, the other one of the first wire 60A and the second wire 60B is fractured by the tensile force, and the whole lower separation member 40 can be moved in the direction away from the upper separation member 30. The movable body 250 is moved from the first position to the second position, and the protrusion end part 253 retracts inside the through concave part 224g in the manner similar to the case where both the first wire 60A and the second wire 60B are fused by applying electric current.

In the above example, the protrusion end part 253 retracts and is moved by separation of the separation device 20. However, when the protrusion end part is provided to a side opposite to the movable body, the protrusion end part can protrude by separation of the separation device.

When the state of the protrusion end part 253 of the trigger device 210 is changed from the protrusion state to the retraction state or from the retraction state to the protrusion state, a trigger of an operation of the apparatus 200 can be generated using the movement of the protrusion end part 253. For example, a mechanical locking of the apparatus 200 can be released, or switch operation of the apparatus 200 can be performed.

According to the present embodiment, since the upper separation member 30 and the lower separation member 40 are separated, the movable body 250 can be moved to the second position. The operation of the movable body 250 moved to the second position can be used as the operation trigger of various apparatuses.

Since the upper separation member 30 is pivoted, the upper separation member 30 and the lower separation member 40 easily have a positional relationship of relative swing motion when one of the first wire 60A and the second wire 60B is fused. Thus, the upper separation member 30 and the lower separation member 40 are easily separated from each other.

The lower separation member 40 receives the biasing force of the first biasing member 250A in the first load position Q1, and receives the biasing force by the second biasing member 250B in the second load position Q2. Thus, the lower separation member 40 can be easily moved in the same posture upon receiving the biasing force at both ends thereof in the longitudinal direction. The movable body 250 moved by the first biasing member 250A and the second biasing member 250B can also be smoothly moved in the same posture from the first position to the second position.

### {Third embodiment}

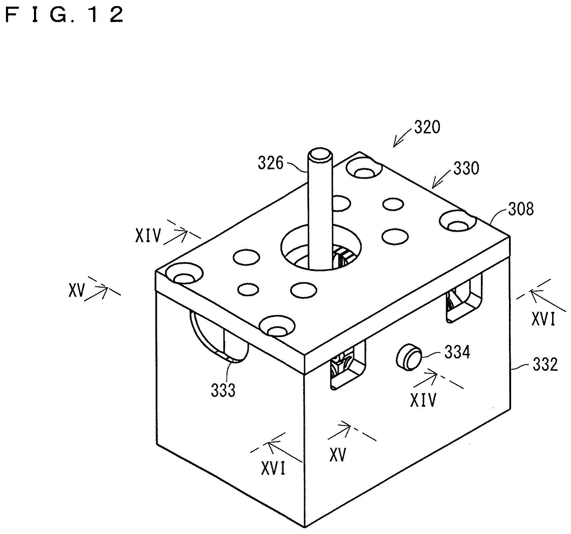

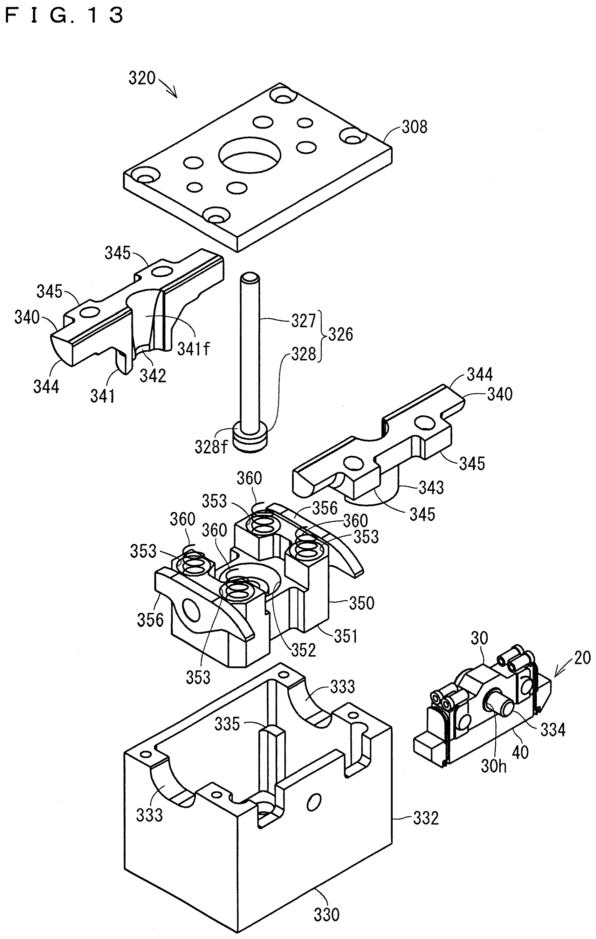

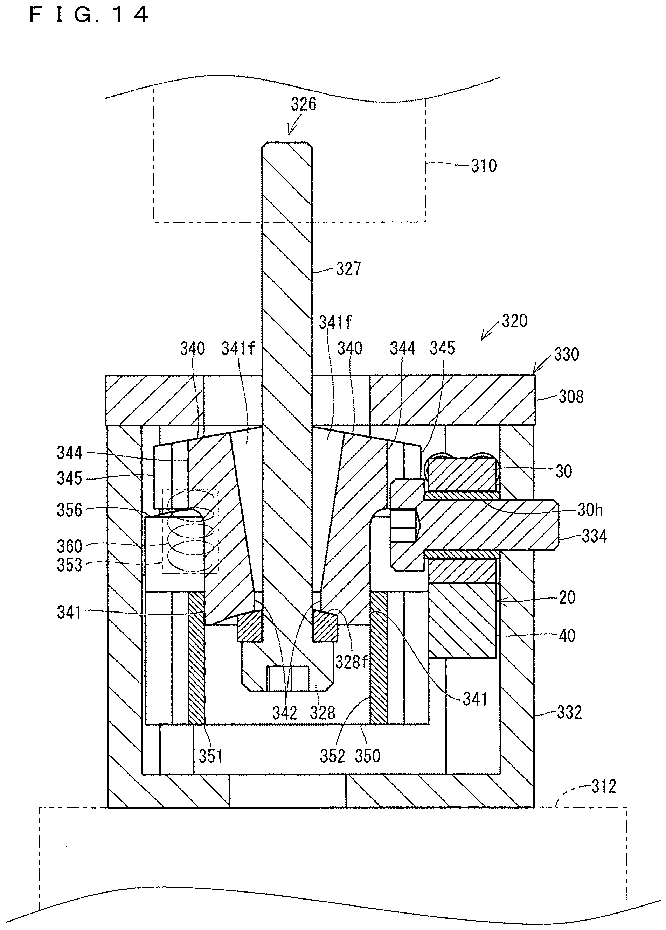

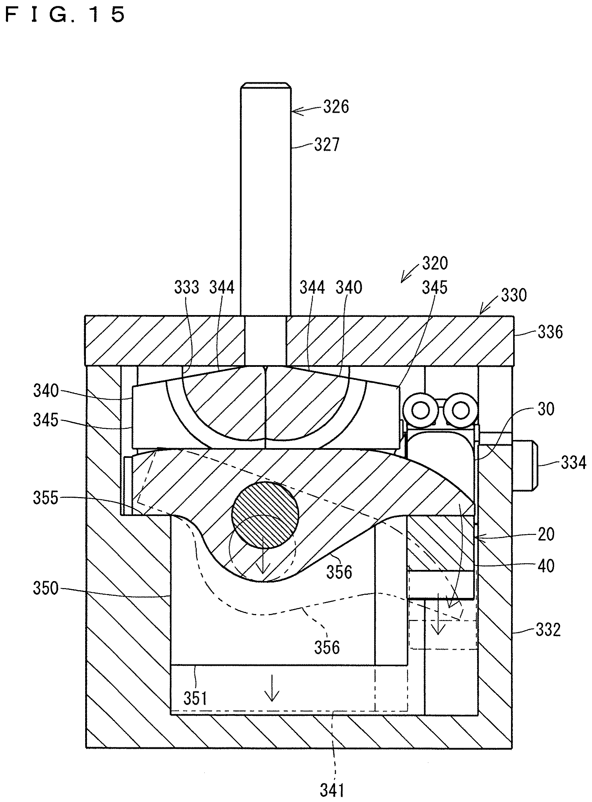

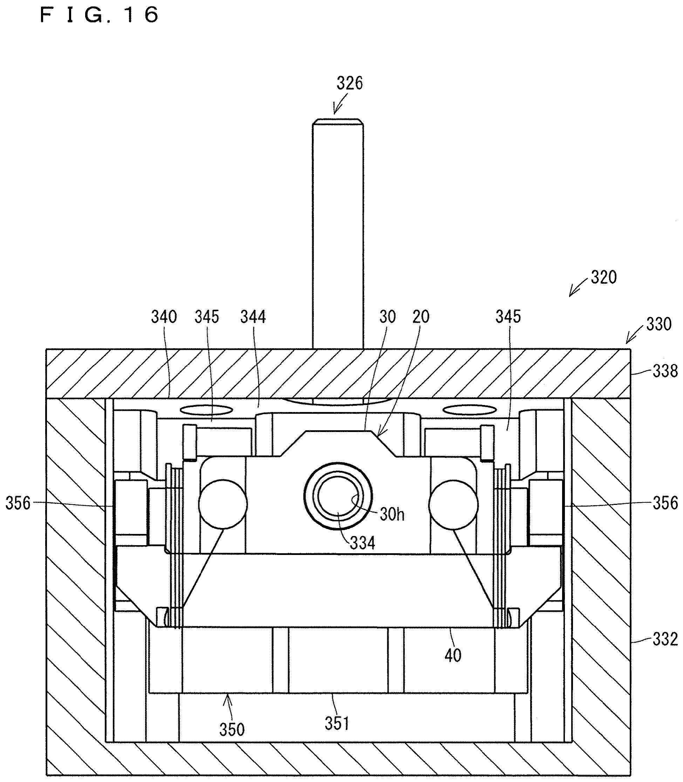

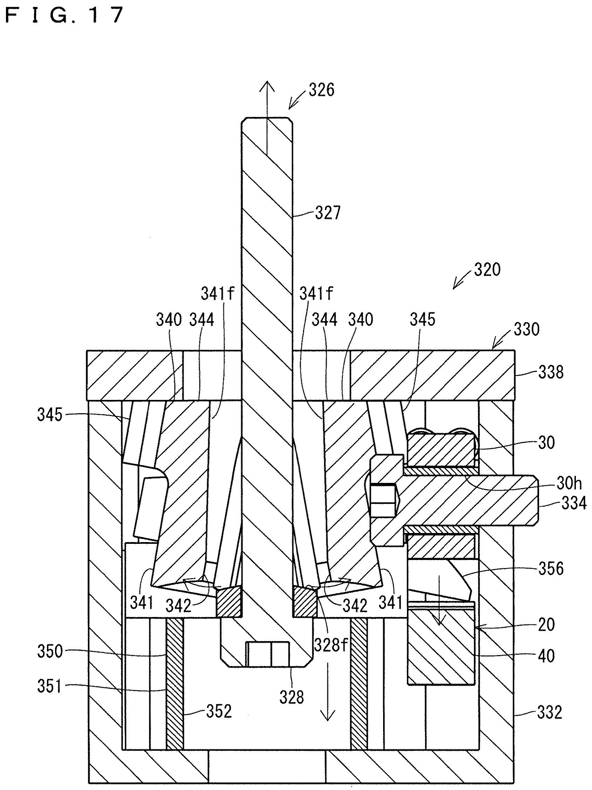

An apparatus fixture separator according to a third embodiment is described. Fig. 12 is a perspective view illustrating an apparatus fixture separator 320. Fig. 13 is an exploded perspective view illustrating the apparatus fixture separator 320. Fig. 14 is a cross-sectional view at an XIV-XIV line in Fig. 12. Fig. 15 is a cross-sectional view at an XV-XV line in Fig. 12. Fig. 16 is a cross-sectional view at an XVI-XVI line in Fig. 12. Fig. 12 to Fig. 16 illustrate a state before an apparatus fixture 326 is separated. Fig. 17 is a cross-sectional view illustrating a state where the apparatus fixture 326 can be separated in the cross section at the XIV-XIV line.

The apparatus fixture separator 320 includes the apparatus fixture 326, a locking member 340, a holder 350, a coil spring 360 as a biasing member, and the separation device 20.

The apparatus fixture 326 is a part including a locking target part 328 and connectable to a fixing target apparatus 310. The fixing target apparatus 310 is a part of a spacecraft. The locking member 340, the holder 350, the coil spring 360, and the separation device 20 are fixed to the other part of the spacecraft such as a base apparatus 312, for example. When the apparatus fixture 326 is separated from the locking member 340, the holder 350, the coil spring 360, and the separation device 20, the fixing target apparatus 310 is separated from the base apparatus 312. The fixing target apparatus 310 or the base apparatus 312 is an apparatus such as a rocket, an artificial satellite, a solar cell paddle, a robot arm, or a landing gear, for example.

The apparatus fixture 326 is formed into an elongated rod-like shape, for example. In the present embodiment, the apparatus fixture 326 includes a shaft part 327 and the locking target part 328. The shaft part 327 is formed into an elongated rod-like shape. The locking target part 328 protrudes outside from one end of the shaft part 327. The locking target part 328 is an annular protrusion part protruding outside from a whole circumferential direction of the shaft part 327. A regulation guide surface 328f gradually inclined with a larger degree toward a center of the shaft part 327 may be formed in a surface of the locking target part 328 on a side on which the shaft part 327 protrudes.

An end part of the apparatus fixture 326 on a side opposite to the locking target part 328 is connected to the fixing target apparatus 310. The apparatus fixture 326 described above may be made up of a spherical metal washer attached to a head part of a bolt, for example.

The locking member 340 includes a locking part 342 which can be locked to the locking target part 328, and can be moved from the locking position toward the locking release position. The locking position is a position where the locking part 342 is locked to the locking target part 328. The locking release position is a position where the locking part 342 releases locking to the locking target part 328.

In the present embodiment, the apparatus fixture separator 320 includes two locking members 340. The apparatus fixture separator 320 may include one or three or more locking members.

The locking member 340 includes a semicylindrical part 341 and a pivoting support part 344.

The semicylindrical part 341 has a shape made by dividing a cylindrical shape in half along a center axis thereof. The locking part 342 which can be locked to the locking target part 328 is located in an intermediate part of an inner peripheral part of the semicylindrical part 341 in a longitudinal direction thereof.

The locking part 342 is a part having a semi-arc-like inner peripheral edge. In the present embodiment, the locking part 342 is located in a part of the semicylindrical part 341 closer to one end. A curvature radius of the locking part 342 is equal to or larger than a radius of the shaft part 327 and is smaller than a radius of the locking target part 328. An inner surface 341f gradually spreading outside one end of the semicylindrical part 341 is formed in a part of the locking member 340 directed the outside from the locking part 342. A part of the locking member 340 directed to a side of the other end of the semicylindrical part 341 from the locking part 342 is formed into a tapered shape gradually having a larger diameter toward the other end. One end of the semicylindrical part 341 is an end directed to the cover part 308, and the other end of the semicylindrical part 341 is an end directed to a bottom of the case body 332.

Inner peripheral edges of two locking part 342 form a through hole which can pass through the shaft part 327 in a state where two semicylindrical parts 341 are incorporated to constitute a cylindrical shape. An inner diameter of the through hole is smaller than an outer diameter of the locking target part 328. Thus, the apparatus fixture 326 is incorporated into between two locking members 340 so that the shaft part 327 passes through between two locking parts 342 and the locking target part 328 faces the regulation guide surface 328f.

In this state, the locking target part 328 cannot come out of between two locking parts 342. Since two semicylindrical parts 341 are kept in the banded incorporation state, regulated is the apparatus fixture 326 coming out of the locking member 340 to a side on which the shaft part 327 extends.

When the banding of two semicylindrical parts 341 is released and two locking parts 342 are opened, the locking target part 328 can come out of between two locking parts 342. Accordingly, the apparatus fixture 326 can come out of the locking member 340 to the side on which the shaft part 327 extends.

A position of the locking member 340 in which two semicylindrical parts 341 are incorporated and the locking part 342 is locked to the locking target part 328 is the locking position. A position of the locking member 340 in which two semicylindrical parts 341 are moved in a direction away from each other and the locking part 342 releases locking to the locking target part 328 is the locking release position. The locking member 340 can be moved from the locking position toward the locking release position.

In the present embodiment, the locking target part 328 is the protrusion part. However, the locking target part may be a depression. In this case, it is sufficient that the locking part of the locking member has a convex shape fitted to the depressed locking target part.

In the present embodiment, since the pivoting support part 344 is supported on the case 330, the locking member 340 is movably supported. That is to say, the pivoting support part 344 protrudes from the other end part of the semicylindrical part 341 toward both outer sides. The longitudinal direction of the pivoting support part 344 is a direction along a direction of an incorporated surface of two semicylindrical parts 341 to be perpendicular to an axis of the semicylindrical part 341. Both end parts of the pivoting support part 344 includes a partial circular peripheral surface curved with an axis along the longitudinal direction of the pivoting support part 344 as a curvature center.

The case 330 includes the case body 332 and the cover part 308. The case body 332 has a box-like shape opened on one side. The cover part 308 has a shape covering the opening of the case body 332.

A pivoting support concave part 333 is formed in each of two edge parts facing each other in an opening peripheral edge of the case body 332. The pivoting support concave part 333 is formed into a concave shape supporting end parts of two pivoting support parts 344 to be pivotable around the axis along the longitudinal direction of the pivoting support part 344.

One end part of the pivoting support part 344 of each of two locking members 340 is supported on one pivoting support concave part 333 in a pivotable form, and the other end part of the pivoting support part 344 of each of two locking members 340 is supported on the other pivoting support concave part 333 in a pivotable form. Since two locking parts 340 swing around the axis along the longitudinal direction of the pivoting support part 344, thus are movably supported between the locking position and the locking release position.

The cover part 308 is formed into a quadrangular plate-like shape to be able to cover the opening of the case body 332 described above. The cover part 308 is fixed to the opening edge part of the case body 332 by screwing, for example. When the opening of the case body 332 is covered by the cover part 308, the end parts of two pivoting support parts 344 are held so as not to come out of the pivoting support concave part 333. A through hole with a diameter through which the apparatus fixture 326 can pass is formed in the cover part 308.

A receiving protrusion part 345 protruding to a side opposite to the pivoting support part 344 on a counterpart side is provided to each of the pivoting support parts 344. The receiving protrusion part 345 can receive force of the coil spring 360 as a biasing member described hereinafter. Two locking members 340 are biased toward the locking position by biasing force of the coil spring 360.

The holder 350 can be moved between the holding position and the release position. The holding position is a position where the locking member 340 is kept in the locking position described above. The release position is a position where holding of the locking member 340 is released so that the locking member 340 can be moved from the locking position to the locking release position.

More specifically, the holder 350 includes a holder body 351 having a holding concave part 352. The holding concave part 352 is a depression capable of housing the incorporated two semicylindrical parts 341, and is formed into a through hole-like shape herein. An inner peripheral surface of the holding concave part 352 is formed into a shape so as to be able to have contact with an outer peripheral surface of the incorporated two semicylindrical parts 341. The incorporated two semicylindrical parts 341 are disposed in the holding concave part 352, thus are banded. The incorporated two semicylindrical parts 341 come out of the holding concave part 352, thus can be separated and moved to the locking release position.

The holder 350 described above is disposed in the case 330, and is movably disposed between the holding position and the release position. The holding position is a position farther away from the bottom surface of the case 330 in relation to the release position. That is to say, the holder 350 holds two locking members 340 in the holding position at the position away from the bottom surface of the case 330. When the holder 350 gets close to the bottom surface of the case 330 in this state, holding of two locking members 340 is released.

The coil spring 360 as the biasing member biases the holder 350 toward the release position. Herein, a spring set concave part 353 is formed in the holder 350. More specifically, the holder body 351 is formed into a rectangular parallelepiped block-like shape. The spring set concave part 353 is formed in each corner part of the holder body 351 in a position on an outer peripheral side in relation to the holding concave part 352 described above. The spring set concave part 353 is opened on a side of the opening of the case body 332. The receiving protrusion part 345 of the pivoting support part 344 is disposed outside the opening of the spring set concave part 353.

The coil spring 360 is set in the spring set concave part 353, and is disposed in a compressed state between the bottom surface of the spring set concave part 353 and the receiving protrusion part 345. The holder 350 is biased toward the release position by biasing force of extension of the coil spring 360. In the present embodiment, the biasing force of the coil spring 360 biases the receiving protrusion part 345 in a direction away from the holder 350. Accordingly, the locking member 340 is biased toward the locking release position.

The locking member 340 and the holder 350 may be biased by different biasing members.

The separation device 20 is as described in the above first embodiment. The separation device 20 may be the separation device 120 described in the modification example of the first embodiment.

The holder 350 is kept in the holding position by banding the upper separation member 30 and the lower separation member 40 in this separation device 20. When the banding of the upper separation member 30 and the lower separation member 40 is released, movement of the holder 350 from the holding position to the release position is allowed.

Herein, the separation device 20 is disposed inside one of four side surfaces of the case body 332. The shaft 334 passes through the case body 332 and is held therein. Since the shaft 334 is inserted into the support hole 30h in the upper separation member 30, the upper separation member 30 is supported in the case body 332 to be swingable around the shaft 334.

A position regulation arm 356 is located on each of both side surfaces of the holder body 351. The position regulation arm 356 is formed into a shape protruding from the holder body 351. Herein, the position regulation arm 356 is formed into an elongated shape so that both ends thereof protrude from the holder body 351. A support shaft part protruding from the side surface of the holder body 351 is fitted in a hole perpendicular to the longitudinal direction of the position regulation arm 356. Accordingly, the position regulation arm 356 is supported to be swingable with respect to the holder body 351.

A support protrusion part 335 is provided to protrude on both corner parts of an inner surface of the case body 332 located on a side opposite to the separation device 20. A surface of the support protrusion part 335 directed to the opening of the case body 332 is located closer to a bottom side in relation to the opening of the case body 332.

One ends of two position regulation arms 356 have contact with both ends of the lower separation member 40 in the longitudinal direction while the holder 350 is disposed in the holding position of the case body 332. The other ends of two position regulation arms 356 have contact with a surface of the support protrusion part 355 facing the opening of the case body. When both ends of the position regulation arm 356 have contact with the end of the lower separation member 40 and the support protrusion part 335 from the side of the opening of the case body 332, the holder 350 is held in the holding position.

In the state where the apparatus fixture separator 320 is assembled in operation, two locking members 340 are incorporated to be located in the locking position. When the locking target part 328 is locked to the locking part 342, regulated is the apparatus fixture 326 coming out of between two locking parts 342 to the side of the shaft part 327.

When two semicylindrical parts 341 are fitted and held in the holding concave part 352 of the holder 350 located in the holding position, two semicylindrical parts 341 are held in the locking position. In this state, a surface of the pivoting support part 344 on the side of the cover part 308 is inclined farther away from the cover part 308 as getting away from the pivoting support part 344. The locking member 340 can be moved from the holding position toward the locking release position by reducing a gap between the surface of the pivoting support part 344 on the side of the cover part 308 and the cover part 308.

Since the coil spring 360 intervenes in the compressed state between the holder 350 and the pivoting support part 344, the holder 350 is biased toward the release position, and the locking member 340 is biased toward the locking release position.

When the position regulation arm 356 of the holder 350 has contact with the support protrusion part 335 and the end part of the lower separation member 40, the holder 350 is regulated not to be moved to the release position.

The biasing force of the coil spring 360 is transmitted to both ends of the lower separation member 40 via the position regulation arm 356. The biasing force acts as force of moving both ends of the lower separation member 40 away from the upper separation member 30. Thus, as described in the first embodiment, when the wire is fused, the lower separation member 40 can be separated from the upper separation member 30 and moved in the direction away from the upper separation member 30. The upper separation member 30 is supported to be swingable around the shaft 334. Thus, even when one of the wires is fused, the lower separation member 40 can be smoothly separated from the upper separation member 30.

When the lower separation member 40 is moved in the direction away from the upper separation member 30, as illustrated in Fig. 15 and Fig. 16, the position regulation arm 356 swings around the support shaft part protruding from the side surface of the holder body 351. The end part of the position regulation arm 356 on the side of the lower separation member 40 is moved to the side of the bottom of the case body 332, and the end part of the position regulation arm 356 on the side of the support protrusion part 335 is moved to the side of the opening of the case body 332. Accordingly, the position regulation arm 356 is deviated from the surface of the support protrusion part 335 facing the opening of the case body, and the holder 350 supporting the position regulation arm 356 can also be moved to the side of the bottom of the case body 332.

As illustrated in Fig. 15, when the holder 350 reaches the side of the bottom of the case body 332, two semicylindrical parts 341 come out of the holding concave part 352 of the holder 350. Accordingly, two locking members 340 can be moved to the locking release position. Herein, since the receiving protrusion part 345 is pressed in the direction away from the holder 350 by the biasing force of the coil spring 360, the locking member 340 is biased toward the locking release position, and is smoothly moved toward the locking release position.

When the locking member 340 is moved to the locking release position, locking of the locking target part 328 and the locking part 342 is released, and the apparatus fixture 326 can come out to a side on which the shaft part 327 extends. Particularly, since the regulation guide surface 328f of the locking target part 328 has contact with the locking part 342, the locking target part 328 and the locking part 342 are hardly locked to each other.

When the apparatus fixture 326 is detached from the locking member 340, the fixing target apparatus 310 to which the apparatus fixture 326 is fixed can be separated from the base apparatus 312.

According to the apparatus fixture separator 320 having such a configuration, when the upper separation member 30 and the lower separation member 40 are separated from each other, the holder 350 is moved to the release position, and the locking member 340 can be moved to the locking release position. Accordingly, locking of the apparatus fixture 326 by the locking member 340 is released. Accordingly, the apparatus fixture 326 is separated from the locking member 340, and the fixing state of the fixing target apparatus 310 is released.

When the separation device 20 or 120 described in the first embodiment or the modification example thereof described above is used as the separation device 20 including the upper separation member 30 and the lower separation member 40 described above, the operation can be performed more reliably.

The configuration of the separation devices 20 and 120 is not limited thereto described above; however, the separation devices 20 and 120 can be used as devices for operating the apparatus fixture separator having various configurations.

### {Fourth embodiment}

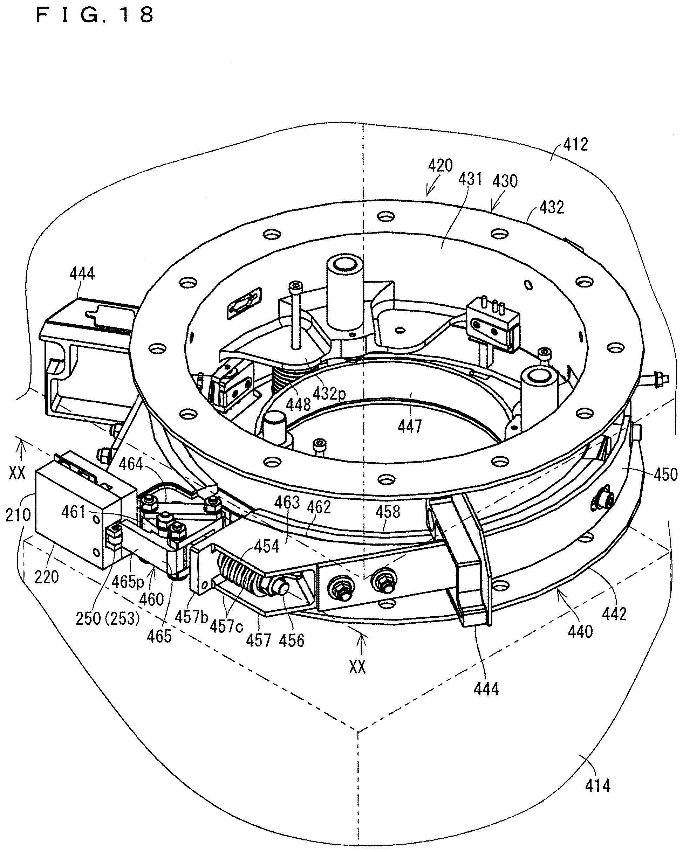

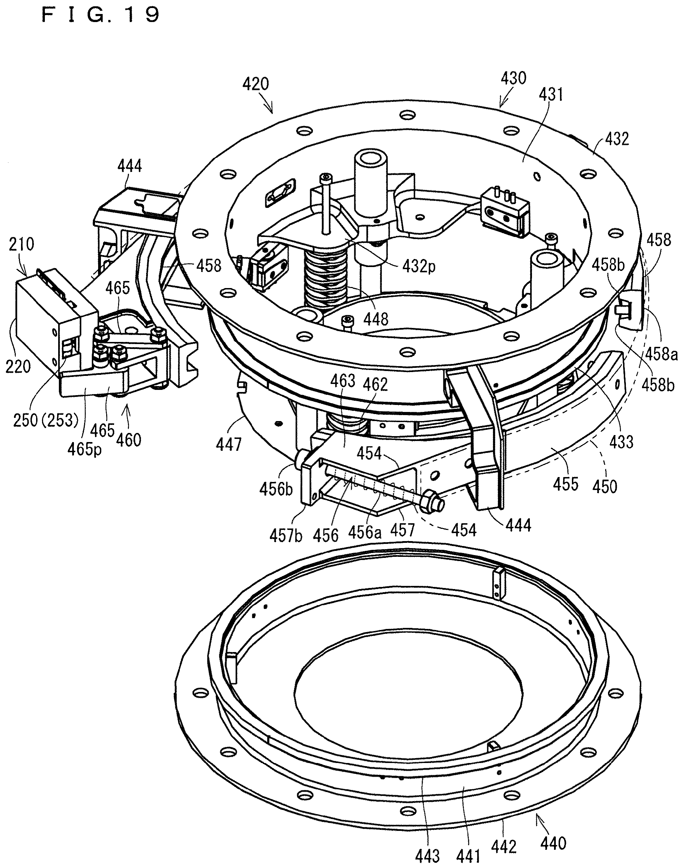

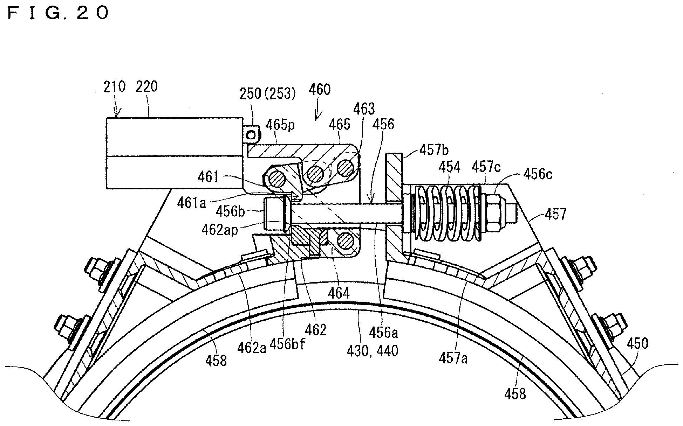

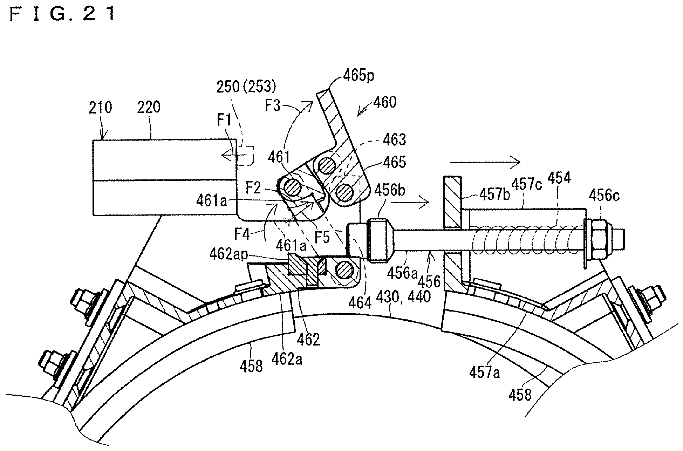

A spacecraft separation device according to a fourth embodiment is described. Fig. 18 is a perspective view illustrating a spacecraft separation device 420. Fig. 19 is a perspective view illustrating a state where the spacecraft separation device 420 is separated. Fig. 20 is a partial cross-sectional view at an XX-XX line in Fig. 18. Fig. 21 is a cross-sectional view illustrating a state where a band fixture 456 is separated in the cross section at the XX-XX line.

The spacecraft separation device 420 is a device banding a first spacecraft 412 and a second spacecraft 414 during a launch and separating the first spacecraft 412 and the second spacecraft 414 in outer space. For example, the first spacecraft 412 is a rocket, and the second spacecraft 414 is an artificial satellite launched by the first spacecraft 412.

The spacecraft separation device 420 includes a first spacecraft fixing member 430, a second spacecraft fixing member 440, a band 450, a band fixture 456, a locking mechanism 460, and the trigger device 210.

The first spacecraft fixing member 430 is fixed to the first spacecraft 412. The second spacecraft fixing member 440 is fixed to the second spacecraft 414.

The first spacecraft fixing member 430 includes an annular part 431, an outer flange part 432, and an incorporation flange part 433. The annular part 431 is formed into a short cylindrical shape. The outer flange part 432 is formed to protrude outside from a peripheral edge on one end side of the annular part 431 in an axial direction thereof. The outer flange part 432 is fixed to the first spacecraft 412 by screwing or welding, for example. The incorporation flange part 433 is formed to protrude outside from a peripheral edge on the other end side of the annular part 431 in the axial direction thereof.

Band holding part 444 are provided at intervals in a circumferential direction of the first spacecraft fixing member 430. The band holding part 444 includes a first side part extending outside in a radial direction from a position in an outer peripheral surface of the annular part 431 closer to the outer flange part 432, a detachment prevention part directed toward a side of the incorporation flange part 433 from a distal end of the first side part, and a second side part directed inside in the radial direction from a distal end part of the detachment prevention part. The first side part is directed to an annular part 441 of the second spacecraft fixing member 440, but is not fixed thereto. Thus, the band holding part 444 is supported on the first spacecraft fixing member 430 in a cantilever form, and is left on a side of the first spacecraft fixing member 430 in a state where the first spacecraft fixing member 430 and the second spacecraft fixing member 440 are separated from each other. The band holding part may be left in any part of the first spacecraft fixing member.

The first spacecraft fixing member 430 includes a separation annular member 447 and a coil spring 448 as a biasing member. The separation annular member 447 is located between a body unit including the annular part 431, the outer flange part 432, and the incorporation flange part 433 in the first spacecraft fixing member 430 and the second spacecraft fixing member 440 while having contact with the second spacecraft fixing member 440.

The coil spring 448 biases the separation annular member 447 to a side of the second spacecraft fixing member 440. Herein, the coil springs 448 are disposed on an inner peripheral side of the annular part 431 of the first spacecraft fixing member 430. A spring receiving piece 432p is provided to protrude on the inner peripheral side of the annular part 431, and the coil spring 448 intervenes in a compressed state between the spring receiving piece 432p and the separation annular member 447. The second spacecraft fixing member 440 is biased in a direction away from the first spacecraft fixing member 430 by elastomeric force of the coil spring 448 in a state where the first spacecraft fixing member 430 and the second spacecraft fixing member 440 are banded. Since the biasing force of the coil springs 448 is transmitted to the second spacecraft fixing member 440 via the separation annular member 447, the whole second spacecraft fixing member 440 in the circumferential direction is biased in the direction away from the first spacecraft fixing member 430, and the second spacecraft fixing member 440 is easily and stably separated.

The second spacecraft fixing member 440 includes the annular part 441, an outer flange part 442, and an incorporation flange part 443. The annular part 441 is formed into the short cylindrical shape. The outer flange part 442 is formed to protrude outside from the peripheral edge on one end side of the annular part 441 in the axial direction. The outer flange part 442 is fixed to the second spacecraft 414 by screwing or welding, for example.

The incorporation flange part 443 is formed to protrude outside from the peripheral edge on the other end side of the annular part 441 in the axial direction. The incorporation flange part 443 has the same outer diameter as the incorporation flange part 433 described above. The first spacecraft fixing member 430 and the second spacecraft fixing member 440 are banded so that the incorporation flange parts 433 and 443 face each other.

The band 450 is wound around the first spacecraft fixing member 430 and the second spacecraft fixing member 440 to band the first spacecraft fixing member 430 and the second spacecraft fixing member 440. In the banding state, the band 450 is in a state of being biased in a spreading direction. Herein, the band 450 is formed of spring steel, for example. An initial inner diameter of the band 450 is set to have a larger value than an outer diameter of the incorporation flange part 433. The band 450 is wound around the first spacecraft fixing member 430 and the second spacecraft fixing member 440 to reduce the diameter of the band 450. The band 450 is biased in the spreading direction by elastomeric force of itself caused by the band 450 returning to an original shape.

The band 450 is wound around the first spacecraft fixing member 430 and the second spacecraft fixing member 440 via an incorporation maintaining member 458.

The incorporation maintaining member 458 includes an arc-like plate part 458a curved into an arc-like shape to be wound around the first spacecraft fixing member 430 and the second spacecraft fixing member 440 and a protrusion edge 458b protruding from both side edges of an inner peripheral surface of the arc-like plate part 458a toward an inner peripheral side. The incorporation maintaining members 458 are divided in a circumferential direction and attached to the first spacecraft fixing member 430 and the second spacecraft fixing member 440 in the banding state. The arc-like plate part 458a of each incorporation maintaining member 458 is located on an outer peripheral side of the incorporation flange part 433 of the first spacecraft fixing member 430 and the incorporation flange part 433 of the second spacecraft fixing member 440, and the protrusion edges 458b on both sides of the arc-like plate part 458a sandwich the incorporation flange parts 433 and 443 facing the protrusion edges 458b. Since the pair of protrusion edges sandwich the incorporation flange parts 433 and 443, the first spacecraft fixing member 430 and the second spacecraft fixing member 440 are kept in the banding state. The outer peripheral side or the inner peripheral side simply described in the present embodiment indicates an outer peripheral side or the inner peripheral side based on the band 450 wound to have the annular shape.

The band 450 described above is wound around an outer periphery of the incorporation maintaining members 458. Since the band 450 is kept in the winding state, the incorporation maintaining member 458 keeps the first spacecraft fixing member 430 and the second spacecraft fixing member 440 in the fixing state. When the band 450 spreads, the incorporation maintaining member 458 can be moved in a direction away from the spacecraft fixing members 430 and 440, and the spacecraft fixing members 430 and 440 can be separated. Herein, the incorporation maintaining member 458 is fixed to an inner peripheral surface of the band 450 by screwing, for example, and when the band 450 spreads, the incorporation maintaining member 458 is moved to the outer peripheral side of the spacecraft fixing members 430 and 440. Since the band 450 is located inside the band holding part 444, even when the band 450 spreads, the band 450 is left on a side of the first spacecraft fixing member 430.

The band fixture 456 is connected to the band 450. The band fixture 456 includes a locking target part 456b. When the locking target part 456b is locked to the locking mechanism 460, the band 450 is kept in the banding state.

More specifically, the band fixture 456 is formed into an elongated rod-like shape. In the present embodiment, the band fixture 456 includes a shaft part 456a and the locking target part 456b. The shaft part 456a is formed into an elongated rod-like shape. The locking target part 456b protrudes outside from one end of the shaft part 456a. The locking target part 456b is an annular protrusion part protruding outside from a whole circumferential direction of the shaft part 456a. A surface of the locking target part 456b on a side on which the shaft part 456a protrudes may be formed on a regulation guide surface 456bf inclined to be gradually smaller toward a center axis of the shaft part 456a.

The band fixture 456 is supported by a support member 457 attached to one end part of the band 450 to be able to proceed and retract. The support member 457 includes a base plate part 457a fixed to one end part of the band 450, a front plate part 457b protruding to an outer peripheral side from a distal end part of the base plate part 457a, and a pair of sidewall parts 457c protruding to the outer peripheral side from both side parts of the base plate part 457a.

A through hole into which the shaft part 456a can be inserted is formed in the front plate part 457b. A retaining part 456c is located on an end part of the shaft part 456a on a side opposite to the locking target part 456b described above.

The shaft part 456a is passed through the through hole of the front plate part 457b so that the locking target part 456b is disposed to an outer side of the end part of the band 450 in relation to the front plate part 457b and the retaining part 456c is disposed closer to an intermediate side of the band 450 in relation to the front plate part 457b. Accordingly, the band fixture 456 is supported to be able to proceed to and retract from the end part of the band 450 within a range that the locking target part 456b and the retaining part 456c have contact with the front plate part 457b so as not to come out thereof.

The band fixture 456 described above may be made up of a spherical metal washer attached to a head part of a bolt, the bolt including a distal end of a screw axis to which a nut is screwed, for example.

A coil spring 454 as a biasing member biases the band fixture 456 to the intermediate side of the band 450. Herein, the coil spring 454 is externally fitted to the shaft part 456a to be compressed between the front plate part 457b and the retaining part 456c. The band fixture 456 is biased toward the intermediate side of the band 450 by biasing force of extension of the coil spring 454.

The band fixture 456 needs not necessarily be supported to be able to proceed to and retract from the band 450, but may also be fixed to the band 450 at a constant position.

The locking mechanism 460 includes a locking member 461 locked to the locking target part 456b of the band fixture 456 so that the band 450 is kept in the banding state described above. The locking mechanism 460 can change a state from a locking state where the locking member 461 is locked to the locking target part 456b toward a locking release state where the locking member 461 releases the locking state of being locked to the locking target part 456b upon receiving force toward a direction in which the band 450 spreads.

More specifically, the locking mechanism 460 includes the support member 462 supported on the other end of the band 450. The support member 462 includes a base plate part 462a and a pair of sidewall parts 463 protruding from both side edges of the base plate part 462a toward an outer peripheral side. The base plate part 462a is fixed to the other end part of the band 450 by screwing, for example.

The locking target part 456b of the band fixture 456 is disposed between the pair of sidewall parts 463 while the band 450 is wound around the spacecraft fixing members 430 and 440.

The locking member 461 is movably supported by the pair of sidewall parts 463. Herein, the locking member 461 is movably supported via a first link 464 and a second link 465.

More specifically, the locking member 461 is an elongated member, and includes a locking concave part 461a in an intermediate part of the locking member 461 in a longitudinal direction thereof. The locking member 461 is located between the pair of sidewall parts 463.

The first link 464 is an elongated member. One end part of the first link 464 is pivotably supported on a part of the pair of sidewall parts 463 on one end side of the band 450. A position where one end part of the first link 464 is supported is a position on a side closer to an inner periphery in relation to the band fixture 456. The first link 464 is located outside the pair of sidewall parts 463. Since the first link 464 intersects with the band fixture 456, the other end part of the first link 464 can be located on an outer peripheral side of the band fixture 456.

The other end part of the first link 464 is pivotably supported on one end part of the locking member 461 via the sidewall part 463.

The second link 465 is an elongated member. The second link 465 is located between the pair of sidewall parts 463. One end part of the second link 465 is pivotably supported on a part of the pair of sidewall parts 463 on one end side of the band 450. A position where one end part of the second link 465 is supported is a position on a side closer to an outer periphery in relation to the band fixture 456.

The other end part of the second link 465 is pivotably supported on the other end part of the locking member 461. One end part of the locking member 461 is pivotably supported on the first link 464, and the other end part of the locking member 461 is pivotably supported on the other end part of the second link 465. Thus, the locking member 461 is also one of links constituting a link mechanism.

The band fixture 456 is inserted into and disposed between the pair of sidewall parts 463 and between a support position on one end side of the first link 464 and a support position on one end side of the second link 465 while the band 450 is in the state of being wound around the spacecraft fixing members 430 and 440.

A length of the first link 464 is larger than a connection length between the second link 465 and the locking member 461. Thus, the locking member 461 can be disposed in a position closer to the support position of one end part of the second link 465 in relation to the support position of one end part of the first link 464. The locking member 461 is located closer to an outer periphery side in relation to the locking target part 456b.

Since the locking concave part 461a of the locking member 461 is located closer to a side on which the shaft part 456a extends in relation to the locking target part 456b, the locking member 461 can be locked to the locking target part 456b. The band fixture 456 is biased in a pullout direction as a direction of pulling out the band fixture 456 from the locking member 461 to one end side of the band 450 by elastomeric force of the band 450 or elastomeric force of the coil spring 454. Since the locking target part 456b is pressed against the locking member 461, force of pressing the locking concave part 461a in the pullout direction of the band fixture 456 constantly acts. The other end part of the second link 465 is biased to the outer peripheral side by this force.

A base-side locking protrusion part 462ap may be provided to protrude on the base plate part 462a. The base-side locking protrusion part 462ap may be locked to the locking target part 456b from a side opposite to the locking member 461.

A regulation lever piece 465p protrudes from the other end part of the second link 465 to avoid a connection position between the other end part of the second link 465 and the other end part of the locking member 461 by passing the outer peripheral side. As described above, since the other end part of the second link 465 is biased to the outer peripheral side, a distal end of the regulation lever piece 465p is also biased to the outer peripheral side.

Both ends of the locking member 461 is connected to free ends of the first link 464 and the second link 465. When oscillation of the first link464 or the second link 465 is not regulated, the state of locking the locking member 461 to the locking target part 456b cannot be kept.

The trigger device 210 has a role to keep the locking state of the locking member 461 locked to the locking target part 456b. That is to say, the trigger device 210 has contact with the regulation lever piece 465p of the locking mechanism 460 while the protrusion end part 253 of the movable body 250 of the trigger device 210 is located in the first position described above, and keeps the locking state of the locking member 461 locked to the locking target part 456b. The protrusion end part 253 is moved to a direction away from the regulation lever piece 465p of the locking mechanism 460 while the protrusion end part 253 of the movable body 250 is moved to the second position, and allowed is a state change of releasing the locking state.

More specifically, the holder 220 of the trigger device 210 is supported by the support member 462. The support position of the trigger device 210 is located closer to the intermediate side of the band 450 in relation to the second link 465. A posture of supporting the trigger device 210 is a posture that the protrusion end part 253 of the trigger device 210 protrudes from the holder 220 toward a side of the second link 465. The protrusion end part 253 is moved to retract in a direction away from the second link 465 by the separation operation of the separation device 20.

A line connecting a rotation center of one end part of the locking member 461, a rotation center of the other end part of the second link 465, and a rotation center of one end part of the second link 465 extends straight while the locking concave part 461a of the locking member 461 is locked to the locking target part 456b of the band fixture 456. The regulation lever piece 465p of the second link 465 passes through an outer peripheral side to bypass the connection position between the second link 465 and the locking member 461, and is directed to the intermediate side of the band 450. A distal end part of the regulation lever piece 465p passes over the locking member 461 to be directed to the intermediate side of the band 450.

The distal end part of the regulation lever piece 465p is located closer to the inner peripheral side in relation to the protrusion end part 253 of the trigger device 210. As described above, since the band fixture 456 is biased in the pullout direction, the locking member 461 is biased to press the connection position with the second link 465 to the outer peripheral side. Since the other end part of the second link 465 is biased to be directed to the outer peripheral side, the distal end part of the regulation lever piece 465p is also biased to be directed to the outer peripheral side, and is biased toward the protrusion end part 253 described above.

In the state where the protrusion end part 253 protrudes from the holder 220, movement of the distal end part of the regulation lever piece 465p to the outer peripheral side is regulated. Thus, displacement of the connection position between the locking member 461 and the second link 465 is regulated, and the locking concave part 461a of the locking member 461 is kept in the state of being locked to the locking target part 456b.

As illustrated by an arrow F1 in Fig. 21, when the protrusion end part 253 is moved to retract by the separation operation of the separation device 20, the positional regulation on the regulation lever piece 465p is released. Accordingly, the locking concave part 461a of the locking member 461 is pressed in the pullout direction of the band fixture 456. Accordingly, as illustrated by an arrow F2, the locking member 461 is rotated around the connection position between the locking member 461 and the first link 464 and can release the locking state with the locking target part 456b. At the same time, as illustrated by an arrow F3, the second link 465 swings so that the distal end part of the regulation lever piece 465p is moved to the outer peripheral side. Then, as illustrated by an arrow F4, since the connection position between the second link 465 and the locking member 461 is moved to the outer peripheral side, the locking member 461 gets away from the locking target part 456b to the outer peripheral side. Also when the locking member 461 is moved to the outer peripheral side, the locking state of the locking member 461 and the locking target part 456b is released.

That is to say, when the locking target part 456b presses the locking concave part 461a in the pullout direction, as illustrated by an arrow F5, the locking concave part 461a is moved in the pullout direction and to the outer peripheral side. Accordingly, the locking state of the locking target part 456b and the locking member 461 is easily released.

When the locking state of the band fixture 456 by the locking mechanism 460 is released, the band 450 spreads, and banding of the incorporation flange parts 433 and 443 by the incorporation maintaining member 458 is released. Accordingly, the second spacecraft fixing member 440 and the first spacecraft fixing member 430 can be separated.

According to the spacecraft separation device 420 having the above configuration, when the upper separation member 30 and the lower separation member 40 are separated, the protrusion end part 253 of the movable body 250 is moved from the first position to the second position. According to the movement of the movable body 250, the winding state of the band 450 can be spread, and the first spacecraft 412 and the second spacecraft 414 can be separated.

When the separation device 20 or 120 described in the first embodiment or the modification example thereof described above is used as the separation device 20 including the upper separation member 30 and the lower separation member 40 described above, the operation can be performed more reliably.

The configuration of the separation devices 20 and 120 or the trigger device 210 is not limited thereto described above; however, the separation devices 20 and 120 or the trigger device 210 can be used as the spacecraft separation device having various configurations.

### {Appendix}

Configurations described in the above-mentioned embodiments and modification examples can be combined with each other as appropriate unless any contradiction occurs.

The present specification and the diagrams disclose each aspect described hereinafter.

A first aspect is a separation device used for a spacecraft to release a mechanical joint by an electrical signal, including: an upper separation member; a lower separation member disposed on the upper separation member; a first wire wound around the upper separation member and the lower separation member to band the upper separation member and the lower separation member and fused by applying electric current; and a second wire wound around the upper separation member and the lower separation member at a position away from the first wire to band the upper separation member and the lower separation member and fused by applying electric current, wherein the first wire and the second wire are disposed in positions so that, in a state where the upper separation member or the lower separation member receives force in a direction away from each other, the upper separation member and the lower separation member are positionally displaced relatively by fusion of one of the first wire and the second wire, and banding by another one of the first wire and the second wire is released.

According to the separation device, the first wire and the second wire are disposed in the positions so that, in a state where the upper separation member or the lower separation member receives force in a direction away from each other, the upper separation member and the lower separation member are positionally displaced relatively by fusion of one of the first wire and the second wire, other and banding by another one of the first wire and the second wire is released. Thus, even when one of the first wire and the second wire is fused, the upper separation member and the lower separation member are separated more reliably.

A second aspect is the separation device according to the first aspect, wherein each of the first wire and the second wire is wound around the upper separation member and the lower separation member a plurality of times.

In this case, since each of the first wire and the second wire is wound around the upper separation member and the lower separation member several times, the upper separation member and the lower separation member are easily kept in a banding state.

A third aspect is the separation device according to the first or second aspect, further including: a first anode and a first cathode having a configuration of applying voltage to a part of a section of the first wire and a second anode and; a second cathode having a configuration of applying voltage to a part of a section of the second wire.

In this case, since the voltage is applied to a part of the section of the first wire and the second wire, the first wire and the second wire are reliably and easily fused.

A fourth aspect is the separation device according to the second aspect, further including: a first anode and a first cathode having a configuration of applying voltage to at least a part of a winding section in the first wire wound once; and a second anode and a second cathode having a configuration of applying voltage to at least a part of a single winding section in the second wire wound.

In this case, even in a case where the first wire and the second wire are wound a plurality of times, when the voltage is applied to at least a part of the single winding section in the first wire and the second wire wound, the first wire and the second wire are fused, and banding of the upper separation member and the lower separation member is easily released.

A fifth aspect is the separation device according to any one of the first to fourth aspects, wherein when a center of oscillation in a relative swing motion of the upper separation member and the lower separation member by fusion of the second wire while the upper separation member or the lower separation member receives force in a direction away from each other is defined as a first center of oscillation, a center of oscillation in a relative swing motion of the upper separation member and the lower separation member by fusion of the first wire while the upper separation member or the lower separation member receives force in a direction away from each other is defined as a second center of oscillation, and a center of the first center of oscillation and the second center of oscillation is defined as a center position, the first wire includes a first fracture section passing through a route closer to the center position than the first center of oscillation is, and the second wire includes a second fracture section passing through a route closer to the center position than the second center of oscillation is.

In this case, since the first wire includes the first fracture section passing through the route closer to the center position in relation to the first center of oscillation, the first fracture section is pulled with a large degree and is easily fractured when the upper separation member and the lower separation member relatively swing around the first center of oscillation. Since the second wire includes the second fracture section passing through the route closer to the center position in relation to the second center of oscillation, the second fracture section is pulled with a large degree and is easily fractured when the upper separation member and the lower separation member relatively swing around the second center of oscillation.

A sixth aspect is the separation device according to the fifth aspect, wherein it is applicable that the first wire includes a first route winding section wound around the upper separation member and the lower separation member and a first fracture promoting section passing through a position closer to the center position than the first route winding section is, and the second wire includes a second route winding section wound around the upper separation member and the lower separation member and a second fracture promoting section passing through a position closer to the center position than the second route winding section is.

In this case, the upper separation member and the lower separation member are easily kept in the banding state by the first route winding section and the second route winding section. When the upper separation member and the lower separation member relatively fluctuate, the first fracture promoting section and the second fracture promoting section are pulled with a larger degree than the first route winding section and the second route winding section, and are fractured more easily.

A seventh aspect is the separation device according to any one of the first to sixth aspects, wherein when a center of oscillation in a relative swing motion of the upper separation member and the lower separation member by fusion of the second wire while the upper separation member or the lower separation member receives force in a direction away from each other is defined as a first center of oscillation, a center of oscillation in a relative swing motion of the upper separation member and the lower separation member by fusion of the first wire while the upper separation member or the lower separation member receives force in a direction away from each other is defined as a second center of oscillation, and a center of the first center of oscillation and the second center of oscillation is defined as a center position, it is applicable that the first wire includes a first deviation section passing through a route farther away from the center position than the first center of oscillation is, and the second wire includes a second deviation section passing through a route farther away from the center position than the second center of oscillation is.

In this case, when the upper separation member and the lower separation member relatively swing around the first center of oscillation, the end part of the upper separation member and the end part of the lower separation member get closer to each other on an outer side than the first center of oscillation. Thus, the first deviation section is easily deviated from the upper separation member or the lower separation member. When the upper separation member and the lower separation member relatively swing around the second center of oscillation, the end part of the upper separation member and the end part of the lower separation member get closer to each other on an outer side than the second center of oscillation. Thus, the second deviation section is easily deviated from the upper separation member or the lower separation member.

An eighth aspect is the separation device according to any one of the first to seventh aspects, wherein the upper separation member, the lower separation member, or both may include a first groove through which the first wire passes and a second groove through which the second wire passes.

In this case, the routes of the first wire and the second wire are stabilized by the first groove and the second groove.

A ninth aspect is the separation device according to any one of the first to eighth aspects, further including a first wire fixture and a second wire fixture each including a body part and a head part protruding to an outer peripheral side from the body part, the body part fixed to the upper separation member or the lower separation member, wherein the first wire includes an end part sandwiched and fixed between the head part of the first wire fixture and the upper separation member or the lower separation member, and the second wire includes an end part sandwiched and fixed between the head part of the second wire fixture and the upper separation member or the lower separation member.

In this case, one end of the first wire and one end of the second wire are easily fixed.

A tenth aspect is the separation device according to the ninth aspect, wherein a distal end of the body part of the first wire fixture is located in the upper separation member or the lower separation member, and a distal end of the body part of the second wire fixture is located in the upper separation member or the lower separation member.

In this case, avoided is contact of the first wire and the second wire with the distal end of the body part at a side opposite to the head part.

An eleventh aspect is a trigger device including: the separation device according to any one of the first to tenth aspects; a holder holding the separation device; a biasing member biasing the lower separation member in a direction of separating the lower separation member from the upper separation member; and a movable body supported by the holder to be movable from a first position toward a second position, located in the first position while the upper separation member and the lower separation member are banded, and moved to the second position by biasing force of the biasing member in accordance with separation of the upper separation member and the lower separation member.

According to the trigger device, when the upper separation member and the lower separation member are separated, the movable body is moved to the second position. The operation of the movable body moved to the second position can be used as the operation trigger of various apparatuses.

A twelfth aspect is the trigger device according to the eleventh aspect, wherein the upper separation member is pivotably supported on the holder between the first wire and the second wire as a pivot center, the biasing member includes a first biasing member and a second biasing member, the lower separation member includes a first load position receiving biasing force of the first biasing member and a second load position receiving biasing force of the second biasing member, the first load position is located farther away to a side of the first wire in relation to the pivot center in a direction connecting the first wire and the second wire, and the second load position is located farther away to a side of the second wire in relation to the pivot center in a direction connecting the first wire and the second wire.

In this case, when the upper separation member is pivoted, the upper separation member and the lower separation member easily have a positional relationship of relative swing motion when one of the first wire and the second wire is fused, and are easily separated.

The lower separation member receives the biasing force of the first biasing member in the first load position, and receives the biasing force by the second biasing member in the second load position. Thus, the lower separation member is easily moved in the same posture. The movable body moved by the first biasing member and the second biasing member can also be smoothly moved in the same posture from the first position to the second position.

A thirteenth aspect is an apparatus fixture separator including: an apparatus fixture including a locking target part to be connectable to a fixing target apparatus; a locking member including a locking part which can be locked to the locking target part, the locking part being movable from a locking position where the locking part is locked to the locking target part toward a locking release position where the locking part releases locking to the locking target part; a holder enabling the locking member to move from a holding position where the locking member is held to be kept in the locking position toward a release position where holding of the locking member is released so that the locking member can be moved from the locking position to the locking release position; a biasing member biasing the holder toward the release position; and the separation device according to any one of the first to tenth aspects, keeping the holder in the holding position while the upper separation member and the lower separation member are banded, and allowing movement of the holder from the holding position to the release position when banding of the upper separation member and the lower separation member is released.

According to the apparatus fixture separator, when the upper separation member and the lower separation member are separated, the holder can be moved to the release position, and the locking member can be moved to the locking release position. Accordingly, locking of the apparatus fixture by the locking member is released. Accordingly, the apparatus fixture is separated from the locking member, and the fixing state of the fixing target apparatus is released.

A fourteenth aspect is a spacecraft separation device including: a first spacecraft fixing member fixed to a first spacecraft; a second spacecraft fixing member fixed to a second spacecraft; a band wound around the first spacecraft fixing member and the second spacecraft fixing member to band the first spacecraft fixing member and the second spacecraft fixing member and biased in a direction spreading from a winding state; a band fixture including a locking target part and connected to the band; a locking mechanism including a locking member locked to the locking target part so that the band is kept in a state of being wound around the first spacecraft fixing member and the second spacecraft fixing member and capable of changing a state from a locking state where the locking member is locked to the locking target part toward a locking release state where the locking member releases the locking state of being locked to the locking target part upon receiving force toward a direction in which the band spreads; and the trigger device according to claim 11 or claim 12 in which the movable body has contact with the locking mechanism to keep the locking state when the movable body is located in the first position and the movable body moves away from the locking mechanism and the locking mechanism changes the state from the locking state to the locking release state when the movable body is moved to the second position.

According to the spacecraft separation device, when the upper separation member and the lower separation member are separated, the movable body is moved from the first position to the second position. According to the movement of the movable body, the winding state of the band is spread, and the first spacecraft and the second spacecraft are separated.

The foregoing description is in all aspects illustrative and does not restrict the present invention. Numerous modifications and variations that have not yet been exemplified are devised without departing from the scope of the present invention.

## Claims

1. A separation device used for a spacecraft to release a mechanical joint by an electrical signal, comprising:
an upper separation member;
a lower separation member disposed on the upper separation member;
a first wire wound around the upper separation member and the lower separation member to band the upper separation member and the lower separation member and fused by applying electric current; and
a second wire wound around the upper separation member and the lower separation member at a position away from the first wire to band the upper separation member and the lower separation member and fused by applying electric current, wherein
the first wire and the second wire are disposed in positions so that, in a state where the upper separation member or the lower separation member receives force in a direction away from each other, the upper separation member and the lower separation member are positionally displaced relatively by fusion of one of the first wire and the second wire, and banding by another one of the first wire and the second wire is released.

2. The separation device according to claim 1, wherein
each of the first wire and the second wire is wound around the upper separation member and the lower separation member a plurality of times.

3. The separation device according to claim 1 or 2, further comprising:
a first anode and a first cathode having a configuration of applying voltage to a part of a section of the first wire; and
a second anode and a second cathode having a configuration of applying voltage to a part of a section of the second wire.

4. The separation device according to claim 2, further comprising:
a first anode and a first cathode having a configuration of applying voltage to at least a part of a single winding section in the first wire wound; and
a second anode and a second cathode having a configuration of applying voltage to at least a part of a single winding section in the second wire wound.

5. The separation device according to claim 1 or 2, wherein
when a center of oscillation in a relative swing motion of the upper separation member and the lower separation member by fusion of the second wire while the upper separation member or the lower separation member receives force in a direction away from each other is defined as a first center of oscillation,
a center of oscillation in a relative swing motion of the upper separation member and the lower separation member by fusion of the first wire while the upper separation member or the lower separation member receives force in a direction away from each other is defined as a second center of oscillation, and
a center of the first center of oscillation and the second center of oscillation is defined as a center position,
the first wire includes a first fracture section passing through a route closer to the center position than the first center of oscillation is, and
the second wire includes a second fracture section passing through a route closer to the center position than the second center of oscillation is.

6. The separation device according to claim 5, wherein
the first wire includes a first route winding section wound around the upper separation member and the lower separation member and a first fracture promoting section passing through a position closer to the center position than the first route winding section is, and
the second wire includes a second route winding section wound around the upper separation member and the lower separation member and a second fracture promoting section passing through a position closer to the center position than the second route winding section is.

7. The separation device according to claim 1 or 2, wherein
when a center of oscillation in a relative swing motion of the upper separation member and the lower separation member by fusion of the second wire while the upper separation member or the lower separation member receives force in a direction away from each other is defined as a first center of oscillation,
a center of oscillation in a relative swing motion of the upper separation member and the lower separation member by fusion of the first wire while the upper separation member or the lower separation member receives force in a direction away from each other is defined as a second center of oscillation, and
a center of the first center of oscillation and the second center of oscillation is defined as a center position,
the first wire includes a first deviation section passing through a route farther away from the center position than the first center of oscillation is, and
the second wire includes a second deviation section passing through a route farther away from the center position than the second center of oscillation is.

8. The separation device according to claim 1 or 2, wherein
the upper separation member, the lower separation member, or both include a first groove through which the first wire passes and a second groove through which the second wire passes.

9. The separation device according to claim 1 or 2, further comprising
a first wire fixture and a second wire fixture each including a body part and a head part protruding to an outer peripheral side from the body part, the body part fixed to the upper separation member or the lower separation member, wherein
the first wire includes an end part sandwiched and fixed between the head part of the first wire fixture and the upper separation member or the lower separation member, and
the second wire includes an end part sandwiched and fixed between the head part of the second wire fixture and the upper separation member or the lower separation member.

10. The separation device according to claim 9, wherein
a distal end of the body part of the first wire fixture is located in the upper separation member or the lower separation member, and
a distal end of the body part of the second wire fixture is located in the upper separation member or the lower separation member.

11. A trigger device, comprising:
the separation device according to claim 1 or 2;
a holder holding the separation device;
a biasing member biasing the lower separation member in a direction of separating the lower separation member from the upper separation member; and
a movable body supported by the holder to be movable from a first position toward a second position, located in the first position while the upper separation member and the lower separation member are banded, and moved to the second position by biasing force of the biasing member in accordance with separation of the upper separation member and the lower separation member.

12. The trigger device according to claim 11, wherein
the upper separation member is pivotably supported on the holder between the first wire and the second wire as a pivot center,
the biasing member includes a first biasing member and a second biasing member,
the lower separation member includes a first load position receiving biasing force of the first biasing member and a second load position receiving biasing force of the second biasing member,
the first load position is located farther away to a side of the first wire in relation to the pivot center in a direction connecting the first wire and the second wire, and
the second load position is located farther away to a side of the second wire in relation to the pivot center in a direction connecting the first wire and the second wire.

13. An apparatus fixture separator, comprising:
an apparatus fixture including a locking target part to be connectable to a fixing target apparatus;
a locking member including a locking part which can be locked to the locking target part, the locking part being movable from a locking position where the locking part is locked to the locking target part toward a locking release position where the locking part releases locking to the locking target part;
a holder enabling the locking member to move from a holding position where the locking member is held to be kept in the locking position toward a release position where holding of the locking member is released so that the locking member can be moved from the locking position to the locking release position;
a biasing member biasing the holder toward the release position; and
the separation device according to claim 1 or 2, keeping the holder in the holding position while the upper separation member and the lower separation member are banded, and allowing movement of the holder from the holding position to the release position when banding of the upper separation member and the lower separation member is released.

14. A spacecraft separation device, comprising:
a first spacecraft fixing member fixed to a first spacecraft;
a second spacecraft fixing member fixed to a second spacecraft;
a band wound around the first spacecraft fixing member and the second spacecraft fixing member to band the first spacecraft fixing member and the second spacecraft fixing member and biased in a direction spreading from a winding state;
a band fixture including a locking target part and connected to the band;
a locking mechanism including a locking member locked to the locking target part so that the band is kept in a state of being wound around the first spacecraft fixing member and the second spacecraft fixing member and capable of changing a state from a locking state where the locking member is locked to the locking target part toward a locking release state where the locking member releases the locking state of being locked to the locking target part upon receiving force toward a direction in which the band spreads; and
the trigger device according to claim 11 in which the movable body has contact with the locking mechanism to keep the locking state when the movable body is located in the first position and the movable body moves away from the locking mechanism and the locking mechanism changes the state from the locking state to the locking release state when the movable body is moved to the second position.
